# EUROPEAN PATENT APPLICATION

(11) **EP 3 525 222 A1**
(43) Date of publication of application: **14.08.2019**
(21) Application number: 17858335.7
(22) Date of filing: 02.10.2017
(51) Int. Cl.: H01G 9/20

(54) **DYE-SENSITIZED SOLAR CELL MODULE**

(30) Priority: 07.10.2016 JP 2016199308
(71) Applicant: Showa Co., Ltd., Ikoma-shi, Nara 630-0142 (JP); Takayasu, Teruki, Ikoma-shi, Nara 630-0142 (JP)
(72) Inventor: TAKAYASU, Teruki, Ikoma-shi, Nara 630-0142 (JP)
(74) Representative: Vossius & Partner Patentanwälte Rechtsanwälte mbB
(86) International application number: PCT/JP2017/035790
(87) International publication number: WO 2018/066497

(57) **Abstract**

The invention provides a dye-sensitized solar cell module that is capable of achieving high electrical power. The invention provides a dye-sensitized solar cell module in which photoelectrodes and counter electrodes are disposed opposite to each other in a T-shape via an electrolyte layer.

## Description

### Technical Field

The present invention relates to a dye-sensitized solar cell module.

### Background Art

Dye-sensitized solar cells are produced by a simple method. Dye-sensitized solar cells, which can be produced at a low cost and have high photoelectric conversion efficiency, have been attracting attention. Various development regarding dye-sensitized solar cells has been conducted.

For dye-sensitized solar cells, conventional photoelectrodes are produced in the following manner.

First, a paste agent containing titanium oxide particles is coated on the surface of transparent conductive glass, which is a glass substrate on which a transparent conductive layer, such as ITO (indium tin oxide) or FTO (fluorine tin oxide), is formed. Then, the obtained coated product is heated at a temperature of 400 to 500°C, thereby producing an electrode having a porous titanium oxide layer. Subsequently, the obtained electrode is immersed in an organic solution containing a dye sensitizing agent, such as ruthenium-based dye or indoline-based dye, thereby producing a photoelectrode in which the dye sensitizing agent is adsorbed to the surface of the porous titanium oxide.

Next, the counter electrode is produced by forming a platinum layer having an electrochemical reduction action by sputtering etc. on a glass substrate or film on which a transparent conductive layer is formed.

In conventional dye-sensitized solar cells, however, the transparent conductive layers that constitute a photoelectrode or a counter electrode have relatively high electrical resistance. Therefore, an increase in the titanium oxide-coated area (the area of transparent conductive layer) significantly reduces the photoelectric conversion efficiency of the obtained dye-sensitized solar cell.

Moreover, in conventional dye-sensitized solar cells, the electrical resistance of the transparent conductive layer is increased by heat treatment during the formation of the porous titanium oxide layer (titanium oxide sintered body), causing a reduction in the photoelectric conversion efficiency of dye-sensitized solar cells.

Under such circumstances, techniques to use metal titanium as a photoelectrode substrate have been examined. According to these techniques, electrical resistance is lower than that of glass substrates on which conventional transparent conductive layers are formed; photoelectric conversion efficiency is higher than that of dye-sensitized solar cells using conventional transparent conductive layers, particularly those having a large area of titanium oxide coating; and corrosion resistance to iodine etc. contained in electrolyte solutions used in dye-sensitized solar cells is imparted.

To produce a module by using multiple dye-sensitized solar cells, it is necessary to insulate the multiple dye-sensitized solar cells from each other. After the multiple dye-sensitized solar cells are insulated, the conductive layers provided at the photoelectrodes and the counter electrodes must be electrically connected to each other.

At this time, to insulate the dye-sensitized solar cells, etching is performed on the transparent conductive layers. These transparent conductive layers are formed on a substrate, such as glass or plastic, which are insulating materials. Therefore, when multiple dye-sensitized solar cells are electrically connected on the flat surface of a transparent substrate, such as glass or plastic, the number and area of dye-sensitized solar cells per unit area of the module are reduced. Consequently, the electrical power generated by the module is reduced.

Patent Literature (PTL) 1 discloses dye-sensitized solar cells each comprising a glass substrate having a transparent conductive layer in which patterning is performed to form strips. In this technique, the dye-sensitized solar cells must be disposed with a certain space between adjacent individual dye-sensitized solar cells to avoid contact with each other. In this structure, the gap area not contributing to the electrical power generation increases while the electric current of the module decreases, reducing the power generation amount.

The power generation amount of a module obtained by serially connecting these dye-sensitized solar cells depends on the number of the dye-sensitized solar cells that constitute the module. Since this module has a reduced number of the dye-sensitized solar cells per unit area, a high voltage cannot be obtained.

There still remains room for improvement in these conventional techniques.

### Citation List

### Patent Literature

PTL 1: WO97/16838

### Summary of Invention

### Technical Problem

When a module is produced using a titanium material for the photoelectrodes, while using a transparent conductive glass or transparent conductive film for the counter electrodes, insulation of the counter electrodes is necessary. The insulation can be easily achieved by performing etching on the transparent conductive layers.

However, a metal titanium material constituting photoelectrodes is conductive in its entirety, and cannot be easily insulated. Thus, for example, the metal titanium material constituting photoelectrodes must be cut, and an arrangement is required so as not to bring the metal titanium materials into contact with each other.

To solve these problems, an object of the present invention is to provide a dye-sensitized solar cell module that is capable of achieving high electrical power.

### Solution to Problem

As a result of intensive studies to solve the problems of the prior art, the present inventor found that the above object can be achieved by a dye-sensitized solar cell having a specific structure.

More specifically, the present invention relates to the following dye-sensitized solar cell modules.

### Item 1-1.

A dye-sensitized solar cell module in which photoelectrodes and counter electrodes are disposed opposite to each other in a T-shape via an electrolyte layer, wherein
(1) two or more of the photoelectrodes, each comprising a titanium material and a titanium oxide layer containing a dye-sensitizing agent formed on a cross-sectional surface of the titanium material, are arrayed;
(2) an insulation material is disposed between the photoelectrodes,
(3) the counter electrodes each comprise a transparent conductive glass or transparent conductive film coated with an electrochemical catalyst layer,
(4) the transparent conductive glass or transparent conductive film is insulated on the insulation material side by removing the transparent conductive layer, together with the electrochemical catalyst layer, by etching,
(5) the photoelectrodes and the counter electrodes are electrically connected, and
(6) the photoelectrodes and the counter electrodes comprise a connecting part from which electricity is carried to the outside.

### Item 1-2.

A dye-sensitized solar cell module in which photoelectrodes and counter electrodes are disposed opposite to each other in a T-shape via an electrolyte layer, wherein
(1) two or more of the photoelectrodes, each comprising a titanium material and a porous titanium oxide layer containing a dye-sensitizing agent formed on a cross-sectional surface of the titanium material, are arrayed,
   the photoelectrodes each having a structure such that (i) the porous titanium oxide layer is formed in an elongated shape on a cut surface of a photoelectrode substrate formed of a 0.1- to 5-mm-thick titanium material substrate obtained by cutting from a 0.1- to 5-mm-thick titanium material substrate, and (ii) the titanium material substrates are integrated with an insulation material,
(2) the insulation material is disposed between the photoelectrodes,
(3) the counter electrodes each comprise a transparent conductive glass or transparent conductive film coated with an electrochemical catalyst layer,
   the counter electrodes each comprising the transparent conductive glass or transparent conductive film coated with the electrochemical catalyst layer being disposed, in a T-shape, above the cut surface of each of the two or more photoelectrodes integrated with the insulation material,
(4) the transparent conductive glass or transparent conductive film is insulated on the insulation material side by removing the transparent conductive layer, together with the electrochemical catalyst layer, by etching,
(5) the photoelectrodes and the counter electrodes are electrically connected, and
(6) the photoelectrodes and the counter electrodes comprise a connecting part from which electricity is carried to the outside.

### Item 2.

The dye-sensitized solar cell module according to Item 1, wherein the arrayed two or more photoelectrodes and the counter electrodes share the same electrolyte layer.

### Item 3.

The dye-sensitized solar cell module according to Item 1 or 2, wherein the photoelectrodes and the counter electrodes are electrically connected by wiring from at least one side of each of the photoelectrodes from among five sides other than the side opposite to the counter electrode in a T-shape via the electrolyte layer.

### Item 4.

The dye-sensitized solar cell module according to any one of Items 1 to 3, wherein the titanium material constituting the photoelectrodes is obtained by cutting from a titanium material with a thickness of 0.1 to 5 mm, and subjecting the cut surface to smoothing treatment.

### Item 5.

The dye-sensitized solar cell module according to any one of Items 1 to 4, wherein the titanium material is at least one material selected from the group consisting of metal titanium, titanium alloys, surface-treated metal titanium, and surface-treated titanium alloys.

### Item 6.

The dye-sensitized solar cell module according to Item 5, wherein a surface-treated layer is removed from at least one side of the surface-treated metal titanium or surface-treated titanium alloy from among five sides other than the side opposite to the counter electrode in a T-shape via the electrolyte layer, and the side from which the surface-treated layer is removed is wired.

### Item 7.

The dye-sensitized solar cell module according to any one of Items 1 to 6, wherein each of the photoelectrodes has a blocking layer on the titanium material on the counter electrode side, and further has a porous titanium oxide layer containing a dye-sensitizing agent on the blocking layer, and wherein the blocking layer comprises at least two layers selected from the group consisting of a layer of titanium oxide, a layer of aluminum oxide, a layer of silicon oxide, a layer of zirconium oxide, a layer of strontium titanate, a layer of magnesium oxide, and a layer of niobium oxide, and always comprises a layer of aluminum oxide.

### Item 8.

The dye-sensitized solar cell module according to Item 7, wherein the blocking layer comprises at least two layers selected from the group consisting of a layer of titanium oxide, a layer of aluminum oxide, and a layer of niobium oxide.

### Item 9.

The dye-sensitized solar cell module according to any one of Items 1 to 8, wherein the porous titanium oxide layer has a rectangular shape.

### Item 10.

The dye-sensitized solar cell module according to any one of Items 1 to 9, wherein the electrochemical reduction catalyst layer is a platinum catalyst layer.

### Item 11.

The dye-sensitized solar cell module according to any one of Items 1 to 10, comprising injection inlets for an electrolyte solution constituting the electrolyte layer.

### Item 12.

The dye-sensitized solar cell module according to Item 11, wherein the injection inlets for the electrolyte solution are provided on the counter electrodes.

The dye-sensitized solar cell module according to any one of the preceding items, wherein the injection inlets for the electrolyte solution constituting the electrolyte layer are provided on the counter electrodes.

### Item 13.

The dye-sensitized solar cell module according to Item 1, comprising an outer frame formed of a material that has durability against components of the electrolyte solution constituting the electrolyte layer.

The dye-sensitized solar cell module according to any one of the preceding items, comprising an outer frame formed of a material that has durability against components of the electrolyte solution constituting the electrolyte layer on the outer circumference of the photoelectrodes integrated with the insulation material.

### Item 14.

The dye-sensitized solar cell module according to Item 13, wherein the material of the outer frame that has durability against the components of the electrolyte solution constituting the electrolyte layer is at least one member selected from the group consisting of titanium, titanium alloys, fluororesins, and glass.

### Item 15.

The dye-sensitized solar cell module according to Item 13 or 14, wherein the outer frame is smoothed at least on the counter electrode side.

### Item 16.

The dye-sensitized solar cell module according to any one of Items 1 to 15, comprising a base, as the outer frame, formed of a material that has durability against the components of the electrolyte solution constituting the electrolyte layer, on the side opposite to the counter electrode side, via the insulation material.

### Item 17.

The dye-sensitized solar cell module according to any one of Items 1 to 16, wherein the transparent conductive glass or transparent conductive film of the counter electrodes is subjected to antireflection-film formation.

### Item 18.

The dye-sensitized solar cell module according to any one of Items 1 to 16, wherein the counter electrodes further comprise an antireflection film on a light irradiation surface of the transparent conductive glass or transparent conductive film.

### Item 19.

The dye-sensitized solar cell module according to Item 15, wherein the interface of the outer frame and the counter electrodes is sealed with a material that has durability against the components of the electrolyte solution constituting the electrolyte layer.

### Item 20.

The dye-sensitized solar cell module according to Item 19, wherein the material for sealing the interface of the outer frame and the counter electrodes is at least one material selected from the group consisting of UV-cured acrylic resin, ionomer resin films, epoxy resin, acrylic resin, hot melt resin, silicone elastomers, and butyl rubber elastomers.

### Item 21.

The dye-sensitized solar cell module according to any one of Items 1 to 20, further comprising a light-concentrating device on the counter electrode side.

### Item 22.

The dye-sensitized solar cell module according to Item 21, further comprising a cooling system.

### Item 23.

The dye-sensitized solar cell module according to any one of Items 1 to 22, wherein the titanium material of the photoelectrodes is produced by the following surface treatment method comprising:
(1) forming titanium nitride on the surface of a metal titanium material or titanium alloy material;
(2) anodizing the metal titanium material or titanium alloy material with the titanium nitride formed on the surface thereof obtained in step (1) using an electrolyte solution that has an etching effect on titanium at a voltage equal to or higher than the spark discharge generating voltage, thereby forming an anatase-type titanium oxide film.

A method for producing the dye-sensitized solar cell module of any one of the preceding items, the method comprising: disposing photoelectrodes and counter electrodes opposite to each other in a T-shape via a spacer; and sealing an electrolyte layer between the photoelectrodes and the counter electrodes, wherein the titanium material of the photoelectrodes is produced by the following surface treatment method comprising:
(1) forming titanium nitride on the surface of a metal titanium material or titanium alloy material;
(2) anodizing the metal titanium material or titanium alloy material with the titanium nitride formed on the surface thereof obtained in step (1) using an electrolyte solution that has an etching effect on titanium at a voltage equal to or higher than the spark discharge generating voltage, thereby forming an anatase-type titanium oxide film.

### Item 24.

The dye-sensitized solar cell module according to any one of Items 1 to 22, wherein the titanium material of the photoelectrodes is produced by the following surface treatment method comprising:
(1) forming titanium nitride on the surface of a metal titanium material or titanium alloy material;
(2) anodizing the metal titanium material or titanium alloy material with the titanium nitride formed on the surface thereof obtained in step (1) in an electrolyte solution that does not have an etching effect on titanium; and
(3) heating the anodized metal titanium material or titanium alloy material obtained in step (2) in an oxidizing atmosphere, thereby forming an anatase-type titanium oxide film.

A method for producing the dye-sensitized solar cell module of any one of the preceding items, the method comprising: disposing photoelectrodes and counter electrodes opposite to each other in a T-shape via a spacer; and sealing an electrolyte layer between the photoelectrodes and the counter electrodes,
wherein
the titanium material of the photoelectrodes is produced by the following surface treatment method comprising:
(1) forming titanium nitride on the surface of a metal titanium material or titanium alloy material;
(2) anodizing the metal titanium material or titanium alloy material with the titanium nitride formed on the surface thereof obtained in step (1) in an electrolyte solution that does not have an etching effect on titanium; and
(3) heating the anodized metal titanium material or titanium alloy material obtained in step (2) in an oxidizing atmosphere, thereby forming an anatase-type titanium oxide film.

### Item 25.

The dye-sensitized solar cell module according to Item 23 or 24, wherein the step of forming titanium nitride is performed by one treatment method selected from the group consisting of PVD treatment, CVD treatment, spraying treatment, heat treatment under an ammonia gas atmosphere, and heat treatment under a nitrogen gas atmosphere.

The method for producing the dye-sensitized solar cell module of any one of the preceding items, wherein the step of forming titanium nitride is performed by one treatment method selected from the group consisting of PVD treatment, CVD treatment, spraying treatment, heat treatment under an ammonia gas atmosphere, and heat treatment under a nitrogen gas atmosphere.

### Item 26.

The dye-sensitized solar cell module according to Item 25, wherein the heat treatment under a nitrogen gas atmosphere is performed in the presence of an oxygen-trapping agent.

The method for producing the dye-sensitized solar cell module according to the preceding items, wherein the heat treatment under a nitrogen gas atmosphere is performed in the presence of an oxygen-trapping agent.

### Advantageous Effects of Invention

The dye-sensitized solar cell module of the present invention exhibits high electrical power.

### Brief Description of Drawings

Fig. 1 is a schematic view (cross-sectional view) showing one embodiment of the dye-sensitized solar cell module of the present invention (series connection).
Fig. 2 is a schematic view (cross-sectional view) showing one embodiment of the dye-sensitized solar cell module of the present invention (series connection). In this dye-sensitized solar cell module, the transparent conductive glass or transparent conductive film of the counter electrodes has an antireflection film (14).
Fig. 3 is a schematic view (cross-sectional view) showing one embodiment of the dye-sensitized solar cell module of the present invention (parallel connection).
Fig. 4 is a schematic view (cross-sectional view) showing one embodiment of the dye-sensitized solar cell module of the present invention (parallel connection). In this dye-sensitized solar cell module, the transparent conductive glass or transparent conductive film of the counter electrodes has an antireflection film (14).
Fig. 5 is a schematic view showing one embodiment of use of the electrolyte in the dye-sensitized solar cell module of the present invention.
Fig. 6 is a schematic view showing one embodiment of use of the electrolyte in the dye-sensitized solar cell module of the present invention.
Fig. 7 is a schematic view showing one embodiment of use of the electrolyte in the dye-sensitized solar cell module of the present invention.

### Description of Embodiments

The present invention is described in detail below.

Since the photoelectrodes of the dye-sensitized solar cell module of the present invention are made of a titanium material that does not transmit light, light is irradiated from the counter electrode side.

Further, since a light-concentrating device is used between the counter electrode and the light source, high electrical power is exhibited.

The dye-sensitized solar cell module of the present invention comprises the following members.

In the dye-sensitized solar cell module, photoelectrodes and counter electrodes are disposed opposite to each other in a T-shape via an electrolyte layer. In this module,
(1) two or more of the photoelectrodes, each comprising a titanium material and a porous titanium oxide layer containing a dye sensitizing agent formed on a cross-sectional surface of the titanium material, are arrayed,
(2) an insulation material is disposed between the photoelectrodes,
(3) the counter electrodes each comprise a transparent conductive glass or transparent conductive film coated with an electrochemical catalyst layer,
(4) the transparent conductive glass or transparent conductive film is insulated on the insulation material side by removing the transparent conductive layer, together with the electrochemical catalyst layer, by etching,
(5) the photoelectrodes and the counter electrodes are electrically connected, and
(6) the photoelectrodes and the counter electrodes comprise a connecting part from which electricity is carried to the outside.

In the dye-sensitized solar cell module of the present invention, the (1) photoelectrodes each preferably have a structure such that (i) the porous titanium oxide layer is formed in an elongated shape on a cut surface of a photoelectrode substrate formed of a 0.1- to 5-mm-thick titanium material substrate obtained by cutting from a 0.1- to 5-mm-thick titanium material substrate; and (ii) the titanium material substrates are integrated with an insulation material.

In the dye-sensitized solar cell module of the present invention, each of the (3) counter electrodes comprising the transparent conductive glass or transparent conductive film coated with the electrochemical catalyst layer is preferably disposed, in a T-shape, above the cut surface of each of the two or more photoelectrodes integrated with the insulation material.

### (1) Photoelectrode

In the dye-sensitized solar cell, a photoelectrode and a counter electrode are disposed opposite to each other via an electrolyte layer. The photoelectrode is obtained by forming a titanium oxide layer containing a dye sensitizing agent on a material selected from the group consisting of metal titanium, titanium alloys, surface-treated metal titanium, and surface-treated titanium alloys (hereinafter also referred to as "titanium material"; photoelectrode substrate).

In the dye-sensitized solar cell, two or more photoelectrodes, each comprising a titanium material and a titanium oxide layer containing a dye sensitizing agent formed on a cross-sectional surface of the titanium material, are arrayed.

### Photoelectrode Substrate

A titanium material itself can be used as the photoelectrode substrate. The titanium material serves as a substrate.

The metal titanium material is titanium itself. When a titanium alloy material is used, the type thereof is not particularly limited. Examples of titanium alloys include Ti-6Al-4V, Ti-4.5Al-3V-2Fe-2Mo, Ti-0.5Pd, and the like.

In the dye-sensitized solar cell of the present invention, a semiconductor layer containing a dye sensitizing agent is formed on the titanium material; thus, photoelectric conversion efficiency is high, particularly when the titanium oxide coated area is large.

The titanium material constituting the photoelectrodes is preferably obtained by cutting from a titanium material having a thickness of 0.1 to 5 mm, and subjecting the cut surface to smoothing treatment. The photoelectrode substrate preferably has a thickness of usually 0.1 to 5 mm, and more preferably 0.3 to 2 mm.

In the dye-sensitized solar cell module, the photoelectrodes and the counter electrodes are disposed opposite to each other in a T-shape via an electrolyte layer; thus, when the titanium material that constitutes the photoelectrodes has a thickness of 0.1 to 5 mm, the maximum width of the titanium oxide layer is equal to the thickness of the titanium material (the thickness of the cut surface).

For the smoothing treatment, it is preferable to use a cross-sectional surface of a cut titanium material.

Before forming a titanium oxide layer containing a dye sensitizing agent on a cut surface of the titanium material, the cut surface of the titanium material is preferably smoothed. When a titanium material is cut, the cut cross-sectional surface does not have a smooth surface. The smoothing is conducted by milling etc.; and more preferably milling, followed by buffing etc.

The photoelectrodes each preferably have a structure such that (i) the porous titanium oxide layer is formed in an elongated shape on a cut surface of a photoelectrode substrate formed of a 0.1- to 5-mm-thick titanium material substrate obtained by cutting from a 0.1- to 5-mm-thick titanium material substrate; and (ii) the titanium material substrates are integrated with an insulation material.

The photoelectrode substrate is preferably a material obtained by cutting from a titanium material, and more preferably a material obtained by performing the following surface treatment on the cut material to form an anatase-type titanium oxide film on its surface.

### Surface Treatment Method A

The photoelectrode substrate (titanium material for the photoelectrode) is preferably a photoelectrode substrate having a semiconductor layer containing anatase-type titanium oxide on the surface thereof, produced by the following surface treatment method comprising the steps of:
(1) forming titanium nitride on the surface of a metal titanium material or titanium alloy material; and
(2) anodizing the metal titanium material or titanium alloy material with titanium nitride formed on the surface thereof obtained in step (1) using an electrolyte solution that has an etching effect on titanium at a voltage equal to or higher than the spark discharge generating voltage, thereby forming an anatase-type titanium oxide film.

### Surface Treatment Method B

The photoelectrode substrate (titanium material for the photoelectrode) is preferably a photoelectrode substrate having a semiconductor layer containing anatase-type titanium oxide on the surface thereof, produced by the following surface treatment method comprising the steps of:
(1) forming titanium nitride on the surface of a metal titanium material or titanium alloy material;
(2) anodizing the metal titanium material or titanium alloy material with titanium nitride formed on the surface thereof obtained in step (1) in an electrolyte solution that does not have an etching effect on titanium; and
(3) heating the anodized metal titanium material or titanium alloy material obtained in step (2) in an oxidizing atmosphere, thereby forming an anatase-type titanium oxide film.

### Step (1) of Surface Treatment Methods A and B

In the step of forming titanium nitride on the surface of a titanium material (metal titanium or titanium alloy) (step (1)), a layer of titanium nitride generally with a thickness of about 0.1 to 100 µm can be formed on the surface of a titanium material. The thickness of the titanium nitride layer is preferably about 0.5 to 50 µm, and more preferably about 1 to 10 µm.

The means for forming titanium nitride on the surface of a titanium material is not particularly limited. For example, titanium nitride is physically or chemically attached to the surface of a titanium material, or titanium and nitrogen are reacted on the surface of a titanium material to thereby form titanium nitride.

The step of forming titanium nitride is preferably performed by one treatment method selected from the group consisting of PVD (physical vapor deposition) treatment, CVD (chemical vapor deposition) treatment, spraying treatment (film formation by spraying), heat treatment under an ammonia gas atmosphere, and heat treatment under a nitrogen gas atmosphere.

Examples of the PVD treatment include ion plating, sputtering, and the like. Examples of the CVD treatment include thermal CVD treatment, plasma CVD treatment, laser CVD treatment, and the like. Examples of the spraying treatment include flame spraying, arc spraying, plasma spraying, laser spraying, and the like.

The heating temperature of the heat treatment under an ammonia gas or nitrogen gas atmosphere is preferably about 500°C or more, more preferably about 750 to 1,050°C, and even more preferably about 750°C to 950°C. It is preferable to heat a titanium material generally at about 500°C or more (preferably about 750°C or more) under a nitrogen gas atmosphere.

The heat treatment under an ammonia gas or nitrogen gas atmosphere is preferably performed in the presence of an oxygen-trapping agent.

It is particularly preferable to form titanium nitride by performing heat treatment under a nitrogen gas atmosphere in the presence of an oxygen-trapping agent.

The oxygen-trapping agent used in the heat treatment of a titanium material is, for example, a substance or gas having a higher oxygen affinity than that of the titanium material. For example, a carbon material, metal powder, hydrogen gas, etc., can be preferably used. These oxygen-trapping agents may be used singly or in a combination of two or more.

Examples of carbon materials include, but are not particularly limited to, graphite carbon, amorphous carbon, carbon having an intermediate crystal structure between graphite carbon and amorphous carbon, and the like. The carbon material may have any shape, such as plate, foil, or powder. It is preferable to use a plate carbon material, in terms of handling properties, and because the thermal strain of the titanium material during heat treatment can be prevented.

Examples of metal powders include, but are not particularly limited to, metal powders of titanium, a titanium alloy, chromium, a chromium alloy, molybdenum, a molybdenum alloy, vanadium, a vanadium alloy, tantalum, a tantalum alloy, zirconium, a zirconium alloy, silicon, a silicon alloy, aluminum, an aluminum alloy, or the like.

It is preferable to use a metal powder of titanium, a titanium alloy, chromium, a chromium alloy, zirconium, a zirconium alloy, aluminum, an aluminum alloy, or the like, because their oxygen affinity is high. The most preferable metal powder is a metal powder of titanium particles or a titanium alloy. These metal powders may be used singly or in a combination of two or more.

The average particle diameter of the metal powder is preferably about 0.1 to 1,000 µm, more preferably about 0.1 to 100 µm, and even more preferably about 0.1 to 10 µm.

The conditions for using an oxygen-trapping agent in an ammonia gas or nitrogen gas atmosphere can be suitably determined depending on the type and shape of the oxygen-trapping agent. For example, when a carbon material or metal powder is used as the oxygen-trapping agent, a titanium material is brought into contact with the carbon material or metal powder so that the surface of the titanium material is covered with the carbon material or metal powder. Then, the titanium material is heated in an ammonia gas or nitrogen gas atmosphere.

When hydrogen gas is used as the oxygen-trapping agent, the titanium material is heated while hydrogen gas is introduced under an ammonia gas or nitrogen gas atmosphere.

The heat treatment can be performed in an atmosphere of ammonia gas, nitrogen gas, or a mixed gas of ammonia gas and nitrogen gas. It is most preferable to use nitrogen gas, in terms of convenience, profitability, and safety.

The reaction pressure of the heat treatment under an ammonia gas or nitrogen gas atmosphere is about 0.01 to 100 MPa, preferably about 0.1 to 10 MPa, and more preferably about 0.1 to 1 MPa. The heat treatment is preferably performed under a nitrogen gas atmosphere.

The heating time of the heat treatment under an ammonia gas or nitrogen gas atmosphere is preferably about 1 minute to 12 hours, more preferably about 10 minutes to 8 hours, and even more preferably about 1 hour to 6 hours. It is preferable to heat the titanium material for this period of time.

When a titanium material is heated under an ammonia gas or nitrogen gas atmosphere, it is preferable, in order to efficiently form titanium nitride on the surface of the titanium material, to reduce the pressure in the furnace for heat treatment using a rotary-type vacuum pump and optionally a mechanical booster pump or an oil diffusion pump, and to reduce the concentration of oxygen remaining in the furnace for heat treatment (in the nitriding furnace).

Titanium nitride can be efficiently formed on the surface of a titanium material by reducing the pressure in the furnace for heat treatment to preferably about 10 Pa or less, more preferably about 1 Pa or less, and even more preferably about 0.1 Pa or less.

Titanium nitride can be efficiently formed on the surface of a titanium material by supplying ammonia gas, nitrogen gas, or a mixed gas of ammonia gas and nitrogen gas, into the decompressed furnace to return the pressure in the furnace, and heating the titanium material. The heating temperature, heating time, and other conditions of the heat treatment using this furnace may be the same as the above-mentioned conditions. As the gas composition, it is most preferable to use nitrogen gas, in terms of convenience, profitability, and safety.

Titanium nitride can be more efficiently formed on the surface of a titanium material by alternately repeating (several times) the decompression treatment that reduces the remaining oxygen concentration in the furnace for heat treatment, and the pressure-returning treatment that supplies nitrogen gas, etc., into the furnace. Furthermore, titanium nitride can be more efficiently formed on the surface of a titanium material by performing decompression treatment in the presence of an oxygen-trapping agent, and heat treatment under a gas atmosphere, such as ammonia gas or nitrogen gas.

The type of titanium nitride formed on the surface of a titanium material is not particularly limited. Examples thereof include TiN, Ti₂N, α-TiN_{0.3}, η-Ti₃N_{2-X}, ξ-Ti₄N_{3-X} (provided that X is 0 or more and less than 3), mixtures thereof, amorphous titanium nitride, and the like. Preferred among these are TiN, Ti₂N, and mixtures thereof; more preferred are TiN, and a mixture of TiN and Ti₂N; and particularly preferred is TiN.

As the means for forming titanium nitride in the present invention, one of the above methods may be used singly, or two or more of them may be used in combination. Of the above methods for forming titanium nitride, heat treatment of a titanium material under a nitrogen gas atmosphere is preferred in terms of convenience, mass production, or production cost.

### Step (2) of Surface Treatment Method A

In surface treatment method A, the titanium material with titanium nitride formed on the surface thereof is anodized using an electrolyte solution that has an etching effect on titanium at a voltage equal to or higher than the spark discharge generating voltage, thereby forming an anatase-type titanium oxide film (step (2)). The produced photoelectrode substrate has an anatase-type titanium oxide-containing semiconductor layer on the surface thereof.

An anatase-type titanium oxide film can be suitably formed by performing anodization. Due to the formation of an anatase-type titanium oxide film, high photoelectric conversion efficiency can be suitably exhibited.

In the surface treatment using a method of applying a voltage equal to or higher than the spark discharge generating voltage, an electrolyte solution that has an etching effect on titanium materials is preferably used. The electrolyte solution preferably contains an inorganic acid and/or organic acid that have an etching effect on titanium. The electrolyte solution preferably further contains hydrogen peroxide. It is preferable to perform anodization by applying a voltage equal to or higher than the spark discharge generating voltage.

As the electrolyte solution, it is preferable to use an aqueous solution containing an inorganic acid and/or organic acid that have an etching effect on titanium materials. Examples of the inorganic acid that has an etching effect on titanium materials include sulfuric acid, hydrofluoric acid, hydrochloric acid, nitric acid, aqua regia, and the like.

Examples of the organic acid that has an etching effect on titanium include oxalic acid, formic acid, citric acid, trichloroacetic acid, and the like. These acids may be used singly, or in a combination of any two or more regardless of whether they are organic acids or inorganic acids.

A preferable embodiment of an electrolyte solution containing two or more acids is, for example, an aqueous solution containing sulfuric acid and optionally phosphoric acid. The proportion of the acids in this electrolyte solution varies depending on the type of acid used, anodization conditions, and other conditions.

The total amount of the acids in this electrolyte solution is generally 0.01 to 10 M, preferably 0.1 to 10 M, and more preferably 1 to 10 M. An example of an electrolyte solution containing sulfuric acid and phosphoric acid is an electrolyte solution containing 1 to 8 M sulfuric acid and 0.01 to 2 M phosphoric acid.

The electrolyte solution preferably contains hydrogen peroxide, in addition to the above organic acid and/or inorganic acid. The electrolyte solution containing hydrogen peroxide allows more efficient production of an anatase-type titanium oxide film. When the electrolyte solution contains hydrogen peroxide, the proportion of hydrogen peroxide is not particularly limited, but is, for example, 0.01 to 5 M, and more preferably 0.01 to 2 M.

A preferable embodiment of the electrolyte solution used in the anodization is, for example, an aqueous solution containing 1 to 8 M sulfuric acid, 0.01 to 2 M phosphoric acid, and 0.1 to 1 M hydrogen peroxide.

An anatase-type titanium oxide film is obtained by immersing a titanium material in the above electrolyte solution, and performing anodization by applying a constant current so that a voltage equal to or higher than the spark discharge generating voltage is applied. For example, the voltage equal to or higher than the spark discharge generating voltage is generally 100 V or more, and preferably 150 V or more.

The anodization can be performed, for example, by increasing the voltage to the above spark discharge generating voltage at a constant rate, and applying a constant voltage for a certain period of time at a voltage equal to or higher than the spark discharge generating voltage. The rate of increasing the voltage to the spark discharge generating voltage is generally 0.01 to 1 v/sec, preferably 0.05 to 0.5 v/sec, and more preferably 0.1 to 0.5 v/sec.

Moreover, the time for applying a voltage equal to or higher than the spark discharge generating voltage is generally 1 minute or more, preferably 1 to 60 minutes, and more preferably 10 to 30 minutes.

The anodization by spark discharge can also be performed by controlling the current, in place of controlling the voltage. The current density in the anodization may be 0.1 A/dm² or more, but is preferably 1 A/dm² to 10 A/dm², in terms of profitability, convenience, and performance.

According to the above method, an anatase-type titanium oxide-containing film having a film thickness of about 1 to 100 µm can be obtained.

### Step (2) of Surface Treatment Method B

In surface treatment method B, the titanium material with titanium nitride formed on the surface thereof is anodized in an electrolyte solution that does not have an etching effect on titanium (step (2)). Then, the anodized titanium material is heated in an oxidizing atmosphere, thereby forming an anatase-type titanium oxide film (step (3)). The produced photoelectrode substrate has an anatase-type titanium oxide-containing semiconductor layer on the surface thereof, and suitably exhibits high photoelectric conversion efficiency.

The electrolyte solution preferably contains at least one acid selected from the group consisting of inorganic acids and organic acids that do not have an etching effect on titanium, or a salt compound thereof. An amorphous titanium oxide film can be formed on the surface of the titanium material with titanium nitride formed on the surface thereof, by anodizing the titanium material in an electrolyte solution that does not have an etching effect on titanium.

The electrolyte solution that does not have an etching effect on titanium is preferably an electrolyte solution containing at least one compound selected from the group consisting of inorganic acids, organic acids, and salts thereof (hereafter also referred to as "an inorganic acid or the like"). The electrolyte solution containing an inorganic acid or the like is preferably a dilute aqueous solution of phosphoric acid, phosphate, or the like.

Only performing step (2) of anodization in surface treatment method B does not generate spark discharges, and crystalline titanium oxide, such as anatase-type titanium oxide, is not generally formed. Anatase-type titanium oxide can be formed from amorphous titanium oxide in the subsequent heat treatment step under an oxidizing atmosphere. Therefore, because an amorphous titanium oxide film is effectively formed on the surface of the titanium material, it is preferable to anodize the titanium material with titanium nitride formed on the surface thereof.

The electrolyte solution that does not have an etching effect on titanium is preferably an electrolyte solution containing at least one compound (inorganic acid, etc.) selected from the group consisting of inorganic acids (phosphoric acid, etc.), organic acids, and salts thereof (phosphate, etc.).

The inorganic acid that does not have an etching effect on titanium is preferably phosphoric acid, carbonic acid, or the like, in terms of convenience, profitability, safety, etc. The organic acid that does not have an etching effect on titanium is preferably acetic acid, adipic acid, lactic acid, or the like. Salts of these acids, such as sodium dihydrogenphosphate, disodium hydrogenphosphate, sodium hydrogencarbonate, sodium acetate, potassium adipate, and sodium lactate, can also be used.

In addition, it is preferable to use an electrolyte solution containing an electrolyte, such as sodium sulfate, potassium sulfate, magnesium sulfate, sodium nitrate, potassium nitrate, magnesium nitrate, or calcium nitrate.

The electrolyte solution that does not have an etching effect on titanium is preferably an electrolyte solution containing at least one compound (inorganic acid, etc.) selected from the group consisting of inorganic acids (phosphoric acid, etc.), organic acids, and salts thereof (phosphate, etc.). The most preferable inorganic acids, etc., are phosphoric acid and phosphate.

The electrolyte solution is preferably a dilute aqueous solution of an inorganic acid or the like. The concentration of the inorganic acid or the like in the electrolyte solution is preferably about 1 wt.%, in terms of profitability, etc. For example, in an electrolyte solution containing phosphoric acid, the concentration of the phosphoric acid is preferably about 0.01 to 10 wt.%, more preferably about 0.1 to 10 wt.%, and even more preferably about 1 to 3 wt.%.

These acids may be used singly, or in a combination of any two or more regardless of whether they are organic acids or inorganic acids. A preferable embodiment of an electrolyte solution containing two or more acids is, for example, an aqueous solution containing phosphate and phosphoric acid.

Although the proportion of the acids in this electrolyte solution varies depending on the type of acid and acid salt used, anodization conditions, and other conditions, the total amount of the acids is generally 0.01 to 10 wt.%, preferably 0.1 to 10 wt.%, and more preferably 1 to 3 wt.%.

The titanium material with titanium nitride formed on the surface thereof obtained in the step of forming titanium nitride is immersed in a dilute electrolyte solution containing an inorganic acid or the like that does not have an etching effect on titanium. Subsequently, anodization is performed by preferably applying a voltage of about 10 to 300 V. It is more preferable to perform anodization at a voltage of about 50 to 300 V, and even more preferably about 50 to 200 V.

The anodization treatment temperature is preferably about 0 to 80°C, in terms of convenience, profitability, safety, etc. It is more preferable to perform anodization at a temperature of about 10 to 50°C, and even more preferably about 20 to 30°C.

The anodization treatment time is preferably about 1 second to 1 hour. It is more preferable to perform anodization for about 10 seconds to 30 minutes, and even more preferably about 5 minutes to 20 minutes.

### Step (3) of Surface Treatment Method B

Next, the titanium material with a titanium oxide film formed on the surface thereof is heated in an oxidizing atmosphere, thereby forming an anatase-type titanium oxide film (Step (3)).

When the metal titanium material, etc., is only heated in an oxidizing atmosphere, rutile-type titanium dioxide is formed, but anatase-type titanium oxide is not sufficiently formed.

The titanium material with titanium nitride formed thereon and with a titanium oxide film (amorphous titanium oxide film) formed thereon (titanium material after anodization) is heated in an oxidizing atmosphere (air oxidation treatment, etc.), thereby forming an anatase-type titanium oxide film, which has excellent photocatalytic characteristics and photoelectric conversion characteristics among crystalline titanium oxides. As a result, the titanium material after heat treatment has excellent photoelectric conversion characteristics.

The oxidizing atmosphere in which heat treatment is performed may be selected from an air oxidizing atmosphere, an atmosphere of a mixture of oxygen gas and nitrogen gas having any oxygen concentration, an oxygen gas atmosphere, and the like; however, heat treatment in an air oxidizing atmosphere is preferred in terms of convenience, profitability, safety, etc.

The temperature of the heat treatment in an oxidizing atmosphere is preferably about 300°C or more, because of the efficient conversion from amorphous titanium oxide to anatase-type titanium oxide. The temperature of the heat treatment in an oxidizing atmosphere is preferably about 800°C or less, in order to prevent a phase transition from anatase-type titanium oxide to rutile-type titanium dioxide. This is because the photoelectric conversion characteristics of rutile-type titanium dioxide are inferior to those of anatase-type titanium oxide. The temperature of the heat treatment in an oxidizing atmosphere is more preferably about 300 to 800°C, even more preferably about 300 to 700°C, and particularly preferably about 400 to 700°C.

The reaction pressure of the heat treatment is about 0.01 to 10 MPa, preferably about 0.01 to 5 MPa, and more preferably about 0.1 to 1 MPa.

The heating time of the heat treatment is preferably about 1 minute to 12 hours, more preferably about 10 minutes to 8 hours, and even more preferably about 1 to 6 hours.

The crystalline titanium oxide film is preferably an anatase-type titanium oxide film. Open-voltage values are improved by using anatase-type titanium oxide, rather than rutile-type titanium dioxide, in a photoelectrode of a dye-sensitized solar cell; thus, the photoelectric conversion characteristics are also high. The heat treatment after the anodization of the present invention results in the formation of a film containing a large amount of anatase-type titanium oxide having high photoelectric conversion characteristics.

The heat treatment allows the production of photoelectric conversion element materials in which a large amount of highly active anatase-type titanium oxide is formed on the surface of the titanium materials. The materials can also be used as photoelectric conversion element materials that achieve high conversion efficiency.

According to the above method, an anatase-type titanium oxide-containing film having a film thickness of about 1 to 100 µm can be obtained.

An excellent photoelectric conversion element material can be produced by forming titanium nitride on the surface of a titanium material, and incorporating, after the formation of titanium nitride and before the heat treatment in an oxidizing atmosphere, the step of performing anodization in an electrolyte solution, such as a dilute aqueous acid solution of phosphoric acid or the like that does not have an etching effect on titanium, or an aqueous solution of a salt of phosphoric acid or the like.

Due to the anatase-type titanium oxide (film) formed on their surface, the titanium materials can be used as photoelectric conversion element materials, such as photoelectrode substrates, of dye-sensitized solar cells, which have been attracting attention as next-generation solar cells.

### Blocking Layer

The photoelectrode preferably has a blocking layer on the titanium material on the counter electrode side, and further has a porous titanium oxide layer containing a dye sensitizing agent on the blocking layer.

The conversion efficiency of the dye-sensitized solar cell can be significantly improved by forming the photoelectrode substrate from a titanium material, and further providing a blocking layer.

The blocking layer prevents the leakage of electrons to the electrolyte solution layer at the interface of the photoelectrode and the photoelectrode substrate, and suppresses the reunion of the electrons with the dye sensitizing agent.

Due to the presence of the blocking layer, in the process of moving to the photoelectrode substrate through the porous titanium oxide layer to which the dye is adsorbed, the excited electrons generated from the dye do not recombine with the dye in an oxidation state, or undergo reverse transfer from the surface of the photoelectrode substrate in contact with the electrolyte solution to the electrolyte solution side.

As a result, the presence of the blocking layer increases the current value and reduces the resistance, thus increasing the power generation amount. The blocking layer is preferably an n-type semiconductor.

It is preferable that the blocking layer be at least one material layer selected from the group consisting of a layer of titanium oxide, a layer of aluminum oxide, a layer of silicon oxide, a layer of zirconium oxide, a layer of strontium titanate, a layer of magnesium oxide, and a layer of niobium oxide. Because at least one material is selected from these materials and finely coated on the photoelectrode substrate, reverse electron transfer in the dye-sensitized solar cell can be prevented, and the conversion efficiency can be significantly improved.

The blocking layer can be formed by coating titanium oxide, aluminum oxide, silicon oxide, zirconium oxide, strontium titanate, magnesium oxide, niobium oxide, or the like on the photoelectrode substrate (titanium material).

A coating method is such that a solution containing a precursor of the blocking layer, such as a titanium compound (e.g., titanium tetrachloride), an aluminum compound (e.g., aluminum chloride), a silicon compound, a zirconium compound, a strontium titanate compound, a magnesium compound, or a niobium compound (e.g., niobium chloride), is coated on the photoelectrode substrate by a method such as spin coating, dip coating, squeegee coating, screen printing, or spraying. Then, it is preferable to perform heat treatment (e.g., firing at about 450°C).

The blocking layer can be formed by PVD treatment or CVD treatment, such as sputtering, ion plating, vacuum deposition, or electron beam deposition, of a material, such as a titanium compound, an aluminum compound, a silicon compound, a zirconium compound, a strontium titanate compound, a magnesium compound, or a niobium compound. A fine blocking layer can be thereby easily formed on the titanium material, which is a photoelectrode substrate.

It is more preferable that the blocking layer comprise at least two layers (a two-layer structure or a three-layer structure) selected from the group consisting of a layer of titanium oxide, a layer of aluminum oxide, a layer of silicon oxide, a layer of zirconium oxide, a layer of strontium titanate, a layer of magnesium oxide, and a layer of niobium oxide.

It is more preferable that the blocking layer comprise at least two layers (a two-layer structure or a three-layer structure) selected from the group consisting of a layer of titanium oxide, a layer of aluminum oxide, and a layer of niobium oxide.

The film thickness of the blocking layer can be changed depending on the type of substance and the coating method. The film thickness of the blocking layer is preferably about 0.1 nm to 10 µm, and more preferably about 1 nm to 1 µm.

It is preferable that a blocking layer having a two-layer structure comprise a layer of aluminum oxide as the lower layer (titanium material side) and a layer of titanium oxide as the upper layer (electrolyte layer or porous titanium oxide side).

It is preferable that a blocking layer having a two-layer structure comprise a layer of niobium oxide as the lower layer (titanium material side), and a layer of titanium oxide as the upper layer (electrolyte layer or porous titanium oxide side).

It is preferable that a blocking layer having a three-layer structure comprise a layer of aluminum oxide as the lower layer (titanium material side), a layer of niobium oxide as the intermediate layer, and a layer of titanium oxide as the upper layer (electrolyte layer or porous titanium oxide side).

The blocking layer preferably comprises at least two layers selected from the group consisting of a layer of titanium oxide, a layer of aluminum oxide, a layer of silicon oxide, a layer of zirconium oxide, a layer of strontium titanate, a layer of magnesium oxide, and a layer of niobium oxide; and always comprises a layer of aluminum oxide.

The blocking layer preferably comprises at least two layers selected from the group consisting of a layer of titanium oxide, a layer of aluminum oxide, and a layer of niobium oxide.

### Titanium Oxide Layer (Porous Titanium Oxide Layer)

In the photoelectrode, a titanium oxide layer (semiconductor layer) containing a dye sensitizing agent is formed on a titanium material (a material selected from the group consisting of metal titanium, titanium alloys, surface-treated metal titanium, and surface-treated titanium alloys).

The titanium oxide layer can be formed by applying a paste agent containing particles of titanium oxide etc., and performing heat treatment under an oxidizing atmosphere. The titanium oxide layer is formed from, for example, a sintered body, and thus becomes a porous titanium oxide.

The dye-sensitized solar cell module of the present invention preferably comprises a porous titanium oxide layer.

The semiconductor layer may be formed as an anatase-type titanium oxide film prepared by the above surface treatment method A or B. Further, a titanium oxide layer can be formed by the step of performing heat treatment under an oxidizing atmosphere after applying a paste agent containing particles of titanium oxide, etc.

The average particle diameter of titanium oxide particles is preferably about 0.1 to 3,000 nm, more preferably about 1 to 1,000 nm, and even more preferably about 10 to 500 nm. It is not necessary to use a single titanium oxide particle powder, and a mixture of a powder having a small particle size and a powder having a large particle size allows light to be scattered in the titanium oxide layer; thus, the photoelectric conversion efficiency of the obtained dye-sensitized solar cell can be improved.

The paste agent is prepared by, for example, dispersing titanium oxide particles in a solvent. The solvent is preferably polyethylene glycol. The content of titanium oxide particles in the paste agent is not particularly limited, and may be appropriately adjusted so that a sintered body is suitably formed.

The method for applying a paste agent to the titanium material is not particularly limited. For example, screen printing, inkjet printing, roll coating, doctor blading, spray coating, etc., can be used.

The thickness of the coating film after applying the paste agent is not particularly limited, and may be suitably determined so that a titanium oxide sintered body having a desired thickness is formed.

The titanium oxide layer is formed from the sintered body.

Two or more of the photoelectrodes, each comprising a titanium material and a titanium oxide layer containing a dye sensitizing agent formed on a cross-sectional surface of the titanium material, are arrayed.

The photoelectrode substrates are formed of a titanium material. The titanium oxide layer (porous titanium oxide layer) formed on a cross-sectional surface obtained by cutting the titanium material has an elongated shape. The titanium oxide layer having a rectangular shape, rather than a square shape, improves the power generation amount, in particular, the current value, without disappearance of electrons generated due to light excitation of the dye sensitizing agent in the titanium oxide layer.

In the dye-sensitized solar cell module of the present invention, the porous titanium oxide layer preferably has a rectangular shape.

Further, the titanium oxide layer having a narrower width further increases the power generation amount, in particular, the current value, without disappearance of electrons generated due to light excitation of the dye sensitizing agent in the titanium oxide layer.

For maximizing the effective area of the dye-sensitized solar cell module, the width of the titanium oxide layer is preferably equal to the thickness of the titanium material.

For narrowing the width of the titanium oxide layer and maximizing the effective area of the dye-sensitized solar cell module, the thinner the thickness of the titanium material, the more preferable. The thickness of the titanium material is preferably about 0.01 to 5 mm, and more preferably about 0.3 to 2 mm.

In the dye-sensitized solar cell module, the photoelectrodes and the counter electrodes are disposed opposite to each other in a T-shape via an electrolyte layer; thus, when the titanium material constituting the photoelectrodes has a thickness of 0.1 to 5 mm, the maximum width of the titanium oxide layer is equal to the thickness (the thickness of the cut surface) of the titanium material.

The dye-sensitized solar cell module of the present invention uses a cut titanium material; thus, a thinner board thickness further increases the number of the photoelectrode substrates that constitute the dye-sensitized solar cell module.

The photoelectrodes each preferably have a structure such that (i) the porous titanium oxide layer is formed in an elongated shape on a cut surface of a photoelectrode substrate formed of a 0.1- to 5-mm-thick titanium material substrate obtained by cutting from a 0.1- to 5-mm-thick titanium material substrate; and (ii) the titanium material substrates are integrated with an insulation material.

When a series connection is performed, the voltage will increase in proportion to the number of the photoelectrode substrates, significantly improving the power generation amount.

When a parallel connection is performed, the current will increase in proportion to the number of the photoelectrode substrates, increasing the power generation amount.

When the photoelectrode substrate is a surface-treated metal titanium material or titanium alloy material, a laminate of the titanium oxide sintered body and the titanium oxide layer is obtained as the titanium oxide layer.

The temperature of the heat treatment is preferably about 100 to 600°C, and more preferably about 400 to 500°C. In particular, the titanium oxide particles can be suitably sintered together by heat treatment at a temperature of about 400 to 500°C. The time of the heat treatment may be suitably determined depending on the heat treatment temperature, etc. The heat treatment is performed in an oxidizing atmosphere (in an atmosphere in which oxygen is present; e.g., in the air).

### Insulation Material

In the dye-sensitized solar cell module, the photoelectrodes and the counter electrodes are disposed opposite to each other in a T-shape via an electrolyte layer, and an insulation material is disposed between the photoelectrodes.

The module cannot be constituted if the titanium materials that constitute the photoelectrode substrates are brought into contact with each other; thus, an insulation material is disposed between the titanium materials to prevent them from being brought into contact with each other.

The insulation material is required to have durability against the electrolyte solution that constitutes the electrolyte layer. The insulation material used herein is preferably a glass material, a fluororesin, a film of a fluororesin, or the like.

The fluororesin used herein is preferably polytetrafluoroethylene (PTFE). PTFE is a polymer of tetrafluoroethylene, and is a fluororesin (fluorinated carbon resin) composed only of fluorine atoms and carbon atoms. As a commercially available product, Teflon (registered trademark) (a product name of Du Pont) can be used.

The insulation material is preferably integrated with the titanium materials constituting the photoelectrode substrates by bonding.

The photoelectrodes each preferably have a structure such that (i) the porous titanium oxide layer is formed in an elongated shape on a cut surface of the photoelectrode substrate formed of a 0.1- to 5-mm-thick titanium material substrate obtained by cutting from a 0.1- to 5-mm-thick titanium material substrate; and (ii) the titanium material substrates are integrated with the insulation material.

The bonding of the photoelectrode substrates is preferably performed by using at least one adhesive selected from epoxy adhesives, acrylic adhesives, silicone-based adhesives, hot-melt-based adhesives, and the like, all of which have durability against the solvent of the electrolyte solution.

Further, it is preferable to use a sheet material of ionomer resin obtained by crosslinking the molecules of an ethylene-methacrylic acid copolymer with metal ions. The material thereof is a hot-melt-based adhesive, which has durability against the electrolyte of the electrolyte solution; thus, the use thereof is most preferable. As a commercially available product, Himilan (produced by Du Pont-Mitsui Polychemicals Co., Ltd.) can be used.

The use of a thinner insulation material can increase the number of photoelectrode substrates per unit area of the dye-sensitized solar cell module of the present invention. Thus, when a series connection is performed, the voltage increases, improving the power generation amount; while when a parallel connection is performed, the current increases, improving the power generation amount.

### Outer Frame

The dye-sensitized solar cell module preferably comprises an outer frame formed of a material that has durability against components of the electrolyte solution constituting the electrolyte layer.

The outer frame must be provided on the outer circumference of the photoelectrodes integrated with the insulation material, so as to support the photoelectrodes and the insulation material, prevent the leakage of the electrolyte solution, and seal the photoelectrodes integrated with the insulation material from the counter electrode.

The dye-sensitized solar cell module of the present invention preferably comprises an outer frame formed of a material that has durability against components of the electrolyte solution constituting the electrolyte layer, on the outer circumference of the photoelectrodes integrated with the insulation material.

The outer frame must be formed of a material that has durability against electrolyte components. The material that constitutes the outer frame is preferably titanium, a titanium alloy, a fluororesin (e.g., PTFE), or glass. Such an outer frame is bonded to the outer circumference of the photoelectrodes integrated with the insulation material.

The bonding is preferably performed by using at least one adhesive selected from the group consisting of epoxy-based adhesives, acrylic-based adhesives, silicone-based adhesives, hot-melt-based adhesives, and the like, all of which have durability against components of the electrolyte solution. In particular, it is preferable to use a sheet material of a fluororesin (e.g., PTFE).

Ionomer resins (e.g., Himilan, produced by Du Pont-Mitsui Polychemicals Co., Ltd.), which have durability against electrolyte solutions, are a hot-melt-based adhesive. Ionomer resins are the most suitable material for the outer frame, and the photoelectrodes integrated with the insulation material.

In the dye-sensitized solar cell module, the outer frame is preferably subjected to smoothing treatment at least on the counter electrode side.

The outer frame serves as a bonding surface (joint surface) for sealing the photoelectrodes integrated with the insulation material from the counter electrodes. Therefore, to improve the bonding between them, smoothing treatment is preferably performed. For smoothing, it is preferable to perform milling, polishing, etc. It is more preferable to ultimately perform buffing.

The dye-sensitized solar cell module preferably comprises, as the outer frame, a base formed of a material that has durability against components of the electrolyte solution constituting the electrolyte layer on the side opposite to the counter electrode side via an insulation material. The titanium material of the photoelectrodes and the material of the base can be insulated from each other via the insulation material.

To prevent the leakage of the electrolyte solution from the bottom of the photoelectrodes integrated with the insulation material, it is preferable to dispose a material that has durability against components of the electrolyte solution at the bottom of the photoelectrodes integrated with the insulation material.

The base (material that constitutes the bottom) is preferably formed of at least one material selected from the group consisting of titanium, titanium alloys, fluororesins (e.g., PTFE), and glass, all of which have durability against components of the electrolyte solution.

The material of the base preferably has a thickness of 1 to 5 mm.

To integrate the material of the base with the photoelectrodes and the insulation material, it is preferable to use at least one material selected from the group consisting of epoxy-based adhesives, acrylic-based adhesives, silicone-based adhesives, and hot-melt-based adhesives, all of which have durability against electrolyte components.

To prevent the photoelectrodes from being electrically connected to each other, it is preferable to dispose an insulating layer at the module base. To dispose the insulating layer, it is preferable to perform coating using at least one member selected from the group consisting of epoxy-based adhesives, acrylic-based adhesives, silicone-based adhesives, and hot-melt-based adhesives.

### Dye Sensitizing Agent

In the photoelectrode, a titanium oxide layer containing a dye sensitizing agent is formed on a titanium material.

The photoelectrodes on which a titanium oxide layer (semiconductor layer) is formed by the above technique is integrated by bonding with an insulation material, and are immersed in a solution containing a dye sensitizing agent, thereby allowing the dye sensitizing agent to be adsorbed to the titanium oxide layer.

The dye sensitizing agent is not particularly limited, as long as it is dye that can absorb light in the near-infrared light region and the visible light region. Preferred dye sensitizing agents are ruthenium metal complexes, such as red dye (N719) and black dye (N749); metal complexes other than ruthenium, such as copper phthalocyanine; organic complexes, such as eosine, rhodamine, merocyanine, and indoline; and the like.

These dye sensitizing agents can be used singly or in a combination of two or more. Among the dye sensitizing agents, ruthenium complexes are preferred, and a mixture of red dye (N719) and black dye (N749), which can absorb light in the near-infrared light region, is more preferred.

The dye sensitizing agent can be adsorbed to the titanium oxide layer by, for example, immersing the semiconductor layer, such as a titanium oxide layer, in a solution containing the dye sensitizing agent. The dye sensitizing agent can be attached to the semiconductor layer by chemical adsorption, physical adsorption, or deposition.

The amount of dye sensitizing agent attached may be suitably determined depending on the area of the semiconductor layer, etc., within a range that does not impair the effect of the present invention.

### (2) Counter Electrode

In the dye-sensitized solar cell module, the photoelectrodes and the counter electrodes are disposed opposite to each other in a T-shape via an electrolyte layer, and the counter electrodes each comprise a transparent conductive glass or transparent conductive film coated with an electrochemical catalyst layer. The transparent conductive glass or transparent conductive film is insulated on the insulation material side by removing the transparent conductive layer, together with the electrochemical catalyst layer, by etching.

The counter electrodes of the dye-sensitized solar cell module, which each comprise a transparent conductive glass or transparent conductive film coated with an electrochemical (reduction) catalyst layer, are disposed, in a T-shape, above the photoelectrodes integrated with the insulation material.

In the dye-sensitized solar cell module, the photoelectrodes and the counter electrodes are disposed opposite to each other in a T-shape via an electrolyte layer. The "T-shape" as used herein does not encompass a structure in which the photoelectrode formed on a flat surface in a T-shape and the corresponding counter electrode formed on a flat surface in a T-shape are disposed in parallel opposite to each other via an electrolyte layer.

That is, it is preferable that a transparent conductive glass or transparent conductive film coated with an electrochemical catalyst layer, i.e., the counter electrodes of the dye-sensitized solar cell module, be disposed, in a T-shape, above a cut surface of each of the two or more photoelectrodes integrated with the insulation material.

At this time, in accordance with the pattern of the photoelectrodes that are integrated with the insulation material and disposed opposite to the counter electrode, the transparent conductive layer of the counter electrode is subjected to etching etc. to form insulating layers (patterning treatment) on glass or a plastic film, which are insulation materials.

The formation of insulating layers (patterning treatment) is preferably performed by adhering a tape (e.g., a polyimide tape) to portions facing the photoelectrodes, followed by sufficiently rubbing for masking. Subsequently, for etching, zinc powder is placed on the non-masked portions of the transparent conductive layer (e.g., FTO film) and electrochemical catalyst layer (e.g., platinum film), and hydrochloric acid is added thereto dropwise to achieve insulation.

The formation of insulating layers (patterning treatment) may be performed, for example, by photolithography that can perform fine patterning by applying a photosensitive resist to the substrate, exposing the resist to form exposure portions and non-exposure portions.

The counter electrode of the dye-sensitized solar cell is obtained by coating a transparent conductive layer, such as ITO (indium tin oxide) or FTO (fluorine tin oxide), onto transparent glass or a transparent plastic material, such as PET (polyethylene terephthalate) or PEN (polyethylene naphthalate). A counter electrode in which an electrochemical (reduction) catalyst layer is coated on the surface of transparent conductive glass or a transparent conductive film on the electrolyte side by PVD treatment, such as electron-beam deposition or sputtering, is used.

The electrochemical (reduction) catalyst layer may be a platinum catalyst layer, a carbon layer, a poly(3,4-ethylenedioxythiophene) (PEDOT) layer, a gold layer, a silver layer, a copper layer, an aluminum layer, a rhodium layer, an indium layer, or the like. The electrochemical reduction catalyst layer is preferably a platinum catalyst layer because, for example, hydrogen overvoltage is low and electrons are easily injected into the electrolyte that has lost electrons in the electrolyte layer.

Since the photoelectrode of the present invention is made of a titanium material that does not transmit light, light is irradiated from the counter electrode side. Since light transparency increases as the thickness of the platinum coating film on the counter electrode is thinner, coating with several nm or less is preferred.

When the coating film thickness is overly thin, electrons are less likely to be injected into the electrolyte that has lost electrons in the electrolyte solution, and the photoelectric conversion efficiency of the obtained dye-sensitized solar cell is thus reduced. Accordingly, the thickness of the platinum layer is more preferably about 0.5 to 1 nm.

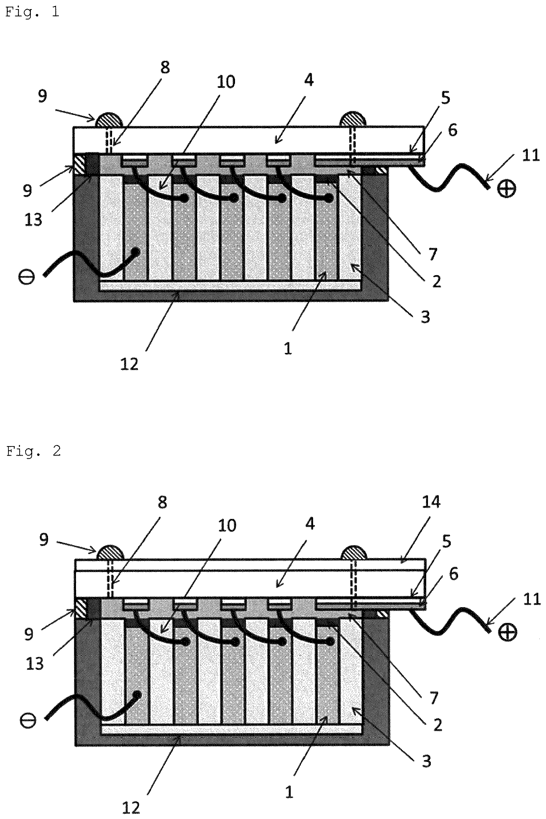

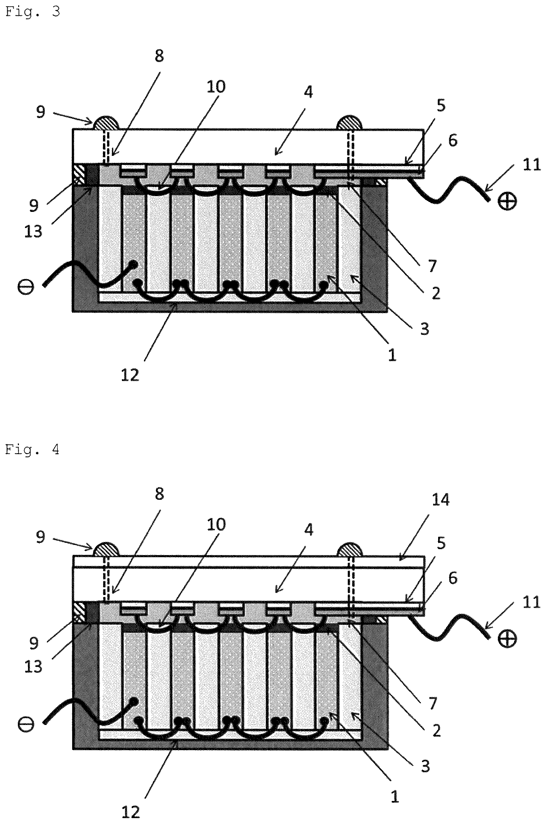

In the dye-sensitized solar cell module, the transparent conductive glass or transparent conductive film of the counter electrode is preferably subjected to antireflection-film formation. The counter electrode preferably further comprises an antireflection film on a light irradiation surface of the transparent conductive glass or transparent conductive film (Figs. 2 and 4).

In order to increase the amount of light entering the dye-sensitized solar cell, an antireflection film is formed on the light irradiation surface of transparent conductive glass or a transparent conductive film, which serves as the counter electrode, by a method such as dry treatment (e.g., vacuum deposition or sputtering), spin coating, or dip coating, using MgF² or SiO²; or an antireflection film is attached to the light irradiation surface. As a result, the current value of the obtained dye-sensitized solar cell increases, increasing the power generation amount.

### (3) Electrolyte Layer

In the dye-sensitized solar cell module, the arrayed two or more photoelectrodes and the counter electrodes preferably share the same electrolyte layer.

The electrolyte solution layer of the dye-sensitized solar cell module of the present invention is used by all of the photoelectric conversion elements; thus, it is not necessary to separate the dye-sensitized solar cells from each other. Consequently, easy sealing is possible, enabling a current and voltage that are commensurate with the linkage number of the photoelectric conversion elements to be obtained.

The electrolyte layer is capable of suppling electrons to the dye sensitizing agent that has been excited by light and achieved the injection of electrons into the semiconductor layer, and reducing the dye sensitizing agent. Further, the electrolyte layer is a layer in which the electrolyte that has lost electrons receives electrons from the platinum catalyst layer of the counter electrode.

A liquid electrolyte layer is, for example, a nonaqueous electrolyte solution containing a redox species. Preferred examples of the redox species include a combination of iodine and an iodide salt, such as lithium iodide, sodium iodide, potassium iodide, or calcium iodide; and a combination of bromine and a bromide salt, such as lithium bromide, sodium bromide, potassium bromide, or calcium bromide. These may be used singly or in a combination of two or more. Further, DMPII (1,2-dimethyl-3-propylimidazolium iodide), TBP (tert-butylpyridine), etc., may be added.

Examples of the solvent include acetonitrile, 3-methoxy propionitrile, ethylene carbonate, propione carbonate, and the like. These solvents may be used singly or in a combination of two or more. In the dye-sensitized solar cell of the present invention, the dye adsorbed to the titanium oxide layer on the photoelectrode is irradiated with light via a light-concentrating device, the counter electrode material, and the electrolyte solution layer to excite the dye by the light; thus, the electrolyte solution layer is required to have high light transparency.

The thickness of the electrolyte layer, that is, the distance between the photoelectrodes and the counter electrodes, is preferably 25 to 100 µm, and more preferably 25 to 50 µm.

### Separator (Spacer) and Sealing Material

In the dye-sensitized solar cell module, a separator (spacer) is preferably disposed so as to prevent contact between the photoelectrodes and the counter electrodes.

The thickness of the separator (spacer) disposed between the photoelectrodes and the counter electrodes determines the thickness of the electrolyte solution layer. In the dye-sensitized solar cell of the present invention, as the thickness of the electrolyte solution layer is thinner, the dye adsorbed to the titanium oxide layer on the photoelectrode is more irradiated with light via a light-concentrating device, the counter electrode material, and the electrolyte solution layer to excite the dye by the light; thus, the electrolyte solution layer is required to have high light transparency, and the thickness of the electrolyte solution layer is preferably thin. However, a separator (spacer) that is too thin allows contact between the photoelectrodes and the counter electrodes.

The thickness of the separator (spacer) is preferably 25 to 100 µm, and more preferably 25 to 50 µm. As the separator, a known separator generally used in the field of cells can be used. The separator may be an ionomer resin film, polyimide resin film, UV-cured acrylic resin, glass material, silane-modified polymer, polyimide tape, or the like.

The area of the separator is also not particularly limited, and may be suitably determined depending on the scale of the target solar cell, etc.

The interface of the outer frame and the counter electrode is preferably sealed with a material that has durability against the components of the electrolyte solution constituting the electrolyte layer.

Examples of the sealing material include UV-cured acrylic resin, ionomer resin films, epoxy resin, polyester resin, acrylic resin, hot melt resin, silicone elastomers, butyl rubber elastomers, glass materials, and the like. TB3017B and TB3035B (produced by ThreeBond) can be used as the UV-cured acrylic resin. The sealing material can seal the gap between the photoelectrodes and the counter electrodes.

The outer frame is preferably subjected to smoothing treatment at least on the surface (interface) on the counter electrode side.

To seal the photoelectrodes integrated with the insulation material from the counter electrodes, the above sealing material is applied to or placed on the outer frame material that is disposed on the outer circumference of the photoelectrodes integrated with the insulation material that are disposed opposite to the counter electrodes. Then, after the counter electrode material is set, the sealing material is cured to achieve primary sealing.

The electrolyte solution layer of the dye-sensitized solar cell module of the present invention is used by all of the photoelectric conversion elements; thus, it is not necessary to separate the dye-sensitized solar cells from each other. Consequently, easy sealing is possible, enabling a current and voltage that are commensurate with the linkage number of the photoelectric conversion elements to be obtained.

Subsequently, the electrolyte solution is injected from electrolyte solution injection inlets, and the electrolyte solution injection inlets are closed with a sealing material, followed by curing to achieve end-sealing.

In the dye-sensitized solar cell module of the present invention, the counter electrodes are preferably provided with injection inlets for the electrolyte solution constituting the electrolyte layer.

The injection of the electrolyte solution is preferably performed by a technique using capillary action. More specifically, an electrolyte is injected into the module by immersing the module in a container filled with the electrolyte solution, reducing the pressure, and then returning the pressure to atmospheric pressure. It is also possible to directly inject the electrolyte solution using a dispenser.

### (4) Light-Concentrating Device

The dye-sensitized solar cell of the present invention comprises a light-concentrating device on the counter electrode side.

A light irradiation means is disposed on the counter electrode side via the light-concentrating device. Since the photoelectrode of the dye-sensitized solar cell is made of a titanium material that does not transmit light, light is irradiated from the counter electrode side. The light-concentrating device disposed between the counter electrode and the light source concentrates wastefully used light, achieving high electrical power that corresponds to high photoelectric conversion efficiency.

Conventional dye-sensitized solar cells using transparent conductive layers, such as ITO (indium tin oxide) and FTO (fluorine tin oxide), have high sheet resistance. In particular, the photoelectric conversion efficiency of dye-sensitized solar cells with a large area is not improved even when light is converged by a light-concentrating device.

The metal titanium, titanium alloy, surface-treated metal titanium material, or surface-treated titanium alloy material used in the photoelectrode of the present invention has advantages in that it has significantly lower sheet resistance than transparent conductive layers, such as ITO and FTO. Therefore, even when the dye-sensitized solar cell of the present invention has a large area, electrical power corresponding to the photoelectric conversion efficiency of the dye-sensitized solar cell can be obtained by converging light using a light-concentrating device.

The light-concentrating device is not particularly limited; however, it is preferable to use glass or a condenser lens, such as a transparent plastic linear Fresnel lens (e.g., PMMA (polymethyl methacrylate), PET (polyethylene terephthalate), or PEN (polyethylene naphthalate)).

Organic components, including the dye sensitizing agent, used in the dye-sensitized solar cell may be deteriorated by short-wavelength ultraviolet rays contained in sunlight. Therefore, a light-concentrating device, such as glass or a transparent plastic linear Fresnel lens (e.g., PMMA, PET, or PEN), can be used to prevent the entrance of short-wavelength ultraviolet rays contained in sunlight into the dye-sensitized solar cell.

The deterioration of organic components, including dye, used in the dye-sensitized solar cell can be prevented, and the durability of the dye-sensitized solar cell can be improved.

Moreover, since the dye-sensitized solar cell itself has heat generated by the convergence of light by a light-concentrating device, the durability of the dye-sensitized solar cell may be impaired. It is therefore preferable to provide a cooling system.

The cooling system is not particularly limited; however, in order to block the heat energy of sunlight between the light-concentrating device and the counter electrode, it is preferable to use, for example, a device provided with a near-infrared cut filter, metal titanium used in the photoelectrode, metal titanium or a titanium alloy, a device for water-cooling or air-cooling a titanium alloy, or a material with high thermal conductivity, such as a copper plate.

Providing such a cooling system can prevent heat generation caused by light converged by a light-concentrating device. In order to further raise cooling efficiency, two or more highly thermally-conductive materials (aluminum, copper plate, etc.) may be laminated onto the photoelectrode surface of the dye-sensitized solar cell of the present invention.

### (5) Method for Producing Dye-Sensitized Solar Cell Module

In the dye-sensitized solar cell module of the present invention, photoelectrodes and counter electrodes are disposed opposite to each other in a T-shape via a spacer, and an electrolyte layer is sealed between the photoelectrodes and the counter electrodes.

The titanium material of the photoelectrodes may be produced in accordance with the surface treatment method described above.

The dye-sensitized solar cell module of the present invention is preferably produced by disposing photoelectrodes and counter electrodes opposite to each other in a T-shape via a spacer, and sealing an electrolyte layer between the photoelectrodes and the counter electrodes.

The titanium material of the photoelectrodes is preferably produced by the following surface treatment method comprising the steps of:
(1) forming titanium nitride on the surface of a metal titanium material or titanium alloy material; and
(2) anodizing the metal titanium material or titanium alloy material with the titanium nitride formed on the surface thereof obtained in step (1) using an electrolyte solution that has an etching effect on titanium at a voltage equal to or higher than the spark discharge generating voltage, thereby forming an anatase-type titanium oxide film.

The dye-sensitized solar cell module of the present invention is preferably produced by disposing photoelectrodes and counter electrodes opposite to each other in a T-shape via a spacer, and sealing an electrolyte layer between the photoelectrodes and the counter electrodes.

The titanium material of the photoelectrodes is preferably produced by the following surface treatment method comprising the steps of:
(1) forming titanium nitride on the surface of a metal titanium material or titanium alloy material;
(2) anodizing the metal titanium material or titanium alloy material with the titanium nitride formed on the surface thereof obtained in step (1) in an electrolyte solution that does not have an etching effect on titanium; and
(3) heating the anodized metal titanium material or titanium alloy material obtained in step (2) in an oxidizing atmosphere, thereby forming an anatase-type titanium oxide film.

The above step of forming titanium nitride is preferably performed by one treatment method selected from the group consisting of PVD treatment, CVD treatment, spraying treatment, heat treatment under an ammonia gas atmosphere, and heat treatment under a nitrogen gas atmosphere.

The heat treatment under a nitrogen gas atmosphere is preferably performed in the presence of an oxygen-trapping agent.

To seal the photoelectrodes integrated with the insulation material from the counter electrodes, the above sealing material is applied to or placed on the outer frame material that is disposed on the outer circumference of the photoelectrodes integrated with the insulation material that are disposed opposite to the counter electrodes. Then, after the counter electrode material is set, the sealing material is cured to achieve primary sealing.

The method for sealing the electrolyte layer is not limited. For example, inlets are provided on the counter electrode, and a material constituting the electrolyte layer is injected through the inlets. The injection inlets may be closed with a predetermined member or resin after the injection of the material is completed (end-sealing).

Moreover, when the electrolyte layer is a gel (a jelly-like form or a semi-solid form), it may be liquefied by heating when the above material is injected.

When the electrolyte layer is solid, for example, a solution in which the solid electrolyte is dissolved is prepared using a solvent that can dissolve the solid electrolyte, the solution is injected into the inlet, and the solvent is then removed.

Further, the dye-sensitized solar cell is produced by electrically connecting, in an alternating fashion, each photoelectrode with a counter electrode that is facing the photoelectrode.

In the dye-sensitized solar cell module, the photoelectrodes and the counter electrodes are disposed opposite to each other in a T-shape via an electrolyte layer, and the photoelectrodes and the counter electrodes are electrically connected.

The electrical connection may be the series connection shown in Figs. 1 and 2, or the parallel connection shown in Figs. 3 and 4. Both series connection and parallel connection are possible.

For electrical connection, the photoelectrodes and the counter electrodes are preferably wired from at least one side of each photoelectrode from among the five sides other than the side opposite to the counter electrode in a T-shape via the electrolyte layer. This is because an electrical connection cannot be made from the photoelectrode on the side opposite to the counter electrode in a T-shape via the electrolyte layer, and because the titanium material constituting the photoelectrodes has conductivity.

In the dye-sensitized solar cell module, when surface-treated metal titanium or a surface-treated titanium alloy is used, the surface-treated layer is preferably removed at least from one side from among the five sides other than the side that is opposite to the counter electrode in a T-shape via the electrolyte layer; and the side from which the surface-treated layer is removed is preferably wired. The removal of the surface-treated layer can form an electrical joint side on the base material (e.g., substrate), since the base material is a titanium material.

The material used for electrical connections is preferably at least one material selected from the group consisting of wires or foils of titanium, copper, silver, aluminum, platinum, and tungsten.

For series connection, a photoelectrode and an adjacent counter electrode are electrically connected.

For parallel connection, adjacent photoelectrodes are connected to each other, while adjacent counter electrodes are connected to each other.

The bonding of the connection wire to the photoelectrodes or the counter electrodes is preferably performed through conductive bonding. More specifically, bonding by soldering or metal pasting is preferable. Since the photoelectrodes are formed of a titanium material, welding may be performed when a titanium wire or a titanium foil is used for electrical connection. After the bonding, it is furthermore preferable to use a UV-cured acrylic resin etc. to achieve secure fixing.

In the dye-sensitized solar cell module, the photoelectrodes and the counter electrodes are disposed opposite to each other in a T-shape via an electrolyte layer; and the photoelectrodes and the counter electrodes comprise a connecting part from which electricity is carried to the outside, as shown in Figs. 1 and 2 (series connection), and Figs. 3 and 4 (parallel connection).

### Examples

The following describes the present invention with reference to Examples. However, the present invention is not limited to these Examples.

### Example 1

### (1) Production of Anodized Titanium Material

A metal titanium plate (titanium material, photoelectrode substrate) was degreased with trichloroethylene. Using a nitriding furnace (NVF-600-PC, produced by Nakanihon-Ro Kogyo Co., Ltd.), titanium nitride was formed on the surface of the degreased metal titanium plate.

First, the metal titanium plate was held by a plate carbon material placed in the nitriding furnace. Subsequently, in order to remove oxygen, the pressure in the nitriding furnace was reduced to 1 Pa or less, and then high-purity (99.99% or more) nitrogen gas was introduced into the nitriding furnace to return the pressure to 0.1 MPa (atmospheric pressure). Then, the temperature of the nitriding furnace was raised to 950°C for 2 hours. Thereafter, heat treatment was performed in the nitriding furnace at 950°C for 1 hour, thereby forming titanium nitride on the surface of the metal titanium plate.

The metal titanium plate with titanium nitride formed on the surface thereof was anodized with 1.5 M sulfuric acid, 0.05 M phosphoric acid, and 0.3 M hydrogen peroxide at a current density of 4 A/dm² for 30 minutes. Thus, an anatase-type titanium oxide film was formed.

### (2) Production of Photoelectrode

A dye-sensitized solar cell was produced using the above surface-treated metal titanium plate (9 mm × 50 mm, 11 mm × 50 mm, 13 mm × 50 mm, or 16 mm × 50 mm) as a photoelectrode. First, the surface-treated metal titanium plate was washed with ethanol, which is a solvent, and dried. Next, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

Subsequently, the resulting material was immersed in a 150 mM aluminum chloride (AlCl₃, produced by Wako Pure Chemical Industries, Ltd.) aqueous solution at room temperature for 2 minutes, and then dried, followed by firing at 450°C for 15 minutes. This treatment was repeated twice. Next, the material was immersed in a 120 mM titanium tetrachloride (TiCl₄, produced by Wako Pure Chemical Industries, Ltd.) aqueous solution at 70°C for 30 minutes, and then dried, followed by firing at 450°C for 15 minutes. This treatment was repeated twice. In this manner, a blocking layer comprising a layer of aluminum oxide as the lower layer and a layer of titanium oxide as the upper layer was formed on the titanium material.

After this treatment, the surface-treated material was coated with a titanium oxide material (PST-18NR, produced by JGC Catalysts and Chemicals Ltd.) by a squeegee method so that the coated area was individually 0.4 cm² (1 mm × 40 mm), 0.8 cm² (2 mm × 40 mm), 1.6 cm² (4 mm × 40 mm), or 3.2 cm² (8 mm × 40 mm), followed by firing at 450°C for 15 minutes. The resulting material was coated 5 times so that the film thickness was 15 µm (semiconductor layer), followed by firing at 450°C for 1 hour. Further, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

Subsequently, 0.45 mM ruthenium-based dye N719 (dye sensitizing agent, produced by Solaronix) and 0.15 mM ruthenium-based dye N749 (dye sensitizing agent, produced by Solaronix) were diluted in a mixture of tert-butanol (t-BtOH) (produced by Wako Pure Chemical Industries, Ltd.) and acetonitrile (CH₃CN) (produced by Wako Pure Chemical Industries, Ltd.) to prepare a dye solution. The mixing ratio of t-BtOH:CH₃CN in the mixture was 1:1. The metal titanium plate after firing was immersed in the dye solution at 40°C for 14 hours, thereby obtaining a photoelectrode material.

The surface-treated metal titanium was ground with a precision grinder (AC-D12, produced by Sunhayato Corp.) to thereby provide a collecting part.

### (3) Production of Counter Electrode Plate

The counter electrode was obtained by washing an FTO (fluorine tin oxide)-deposited glass plate (produced by Asahi Glass Co., Ltd.) with solvents (acetone and ethanol), and drying the plate, followed by electron-beam deposition of 1-nm platinum.

A terminal part was provided by coating Special Solder Cerasolzer #186 (produced by Kuroda Techno Co., Ltd.).

### (4) Production of Dye-Sensitized Solar Cell

0.01 M I₂ (iodine), 0.02 M LiI (lithium iodide), 0.72 M DMPII (1,2-dimethyl-3-propylimidazolium iodide), and 1.0 M TBP (tert-butylpyridine) were dissolved in acetonitrile (produced by Wako Pure Chemical Industries, Ltd.) to prepare an electrolyte solution. The prepared electrolyte solution was placed in the gap between the photoelectrodes and the counter electrodes (electrolyte layer).

Subsequently, the gap between the electrodes was sealed with a UV-cured acrylic resin (TB3035B, sealing material, produced by ThreeBond). The sealing material was cured by using a conveyor-type UV irradiation apparatus (VB-15201BY-A, produced by Ushio Inc.) with an integrated intensity of 40 kJ/m², thus producing dye-sensitized solar cells.

### (5) Evaluation Results

Table 1 shows the results of the evaluation of the photoelectric conversion efficiency of the dye-sensitized solar cells having different titanium oxide material coated areas (cell sizes).

The results shown in Table 1 reveal that the narrower the cell width of the dye-sensitized solar cell, the higher the conversion efficiency was.

**Table 1**

| Cell size | Short-circuit current density (mA/cm²) | Open-circuit voltage (V) | Fill factor | Conversion efficiency (%) |
|---|---|---|---|---|
| 1 mm (width) × 40 mm | 29.69 | 0.75 | 0.67 | 14.82 |
| | 29.52 | 0.76 | 0.66 | 14.94 |
| | 29.82 | 0.74 | 0.67 | 14.87 |
| 2 mm (width) × 40 mm | 18.70 | 0.76 | 0.68 | 9.56 |
| | 17.84 | 0.75 | 0.69 | 9.20 |
| | 18.86 | 0.75 | 0.68 | 9.60 |
| 4 mm (width) × 40 mm | 16.86 | 0.74 | 0.67 | 8.34 |
| | 15.84 | 0.74 | 0.67 | 7.81 |
| | 14.97 | 0.75 | 0.61 | 6.80 |
| 8 mm (width) × 40 mm | 12.85 | 0.76 | 0.62 | 6.04 |
| | 12.68 | 0.73 | 0.64 | 5.99 |
| | 12.40 | 0.75 | 0.62 | 5.77 |

### Example 2

### (1) Production of Anodized Titanium Material

A metal titanium plate (titanium material, photoelectrode substrate) was degreased with trichloroethylene. Using a nitriding furnace (NVF-600-PC, produced by Nakanihon-Ro Kogyo Co., Ltd.), titanium nitride was formed on the surface of the degreased metal titanium plate.

First, the metal titanium plate was held by a plate carbon material placed in the nitriding furnace. Subsequently, in order to remove oxygen, the pressure in the nitriding furnace was reduced to 1 Pa or less, and then high-purity (99.99% or more) nitrogen gas was introduced into the nitriding furnace to return the pressure to 0.1 MPa (atmospheric pressure). Then, the temperature of the nitriding furnace was raised to 950°C for 2 hours. Thereafter, heat treatment was performed in the nitriding furnace at 950°C for 1 hour, thereby forming titanium nitride on the surface of the metal titanium plate.

The metal titanium plate with titanium nitride formed on the surface thereof was anodized with 1.5 M sulfuric acid (produced by Wako Pure Chemical Industries, Ltd.), 0.05 M phosphoric acid (produced by Wako Pure Chemical Industries, Ltd.), and 0.3 M hydrogen peroxide (produced by Wako Pure Chemical Industries, Ltd.) at a current density of 4 A/dm² for 30 minutes. Thus, an anatase-type titanium oxide film was formed.

Further, in order to remove the low-order titanium oxide contained in the anodic oxide film, anodization was performed with an aqueous solution of 0.3 M ammonium hydrogen fluoride (produced by Wako Pure Chemical Industries, Ltd.) and hydrogen peroxide (produced by Wako Pure Chemical Industries, Ltd.) at 0.1 A/dm² for 15 minutes.

### (2) Production of Photoelectrode

A dye-sensitized solar cell was produced using the above surface-treated metal titanium plate (9 mm × 50 mm) as a photoelectrode. First, the surface-treated metal titanium plate was washed with ethanol, which is a solvent, and dried. Next, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

Subsequently, the resulting material was immersed in a 150 mM aluminum chloride (AlCl₃, produced by Wako Pure Chemical Industries, Ltd.) aqueous solution at room temperature for 2 minutes, and then dried, followed by firing at 450°C for 15 minutes. This treatment was repeated twice. Next, the material was immersed in a 10 mM niobium chloride (NbCl₅, produced by Wako Pure Chemical Industries, Ltd.) aqueous solution at 70°C for 30 minutes, and then dried, followed by firing at 450°C for 15 minutes. This treatment was repeated twice. Thereafter, the material was immersed in a 120 mM titanium tetrachloride (TiCl₄, produced by Wako Pure Chemical Industries, Ltd.) aqueous solution at 70°C for 30 minutes, and then dried, followed by firing at 450°C for 15 minutes. This treatment was repeated twice. In this manner, a blocking layer comprising a layer of aluminum oxide as the lower layer, a layer of niobium oxide as the intermediate layer, and a layer of titanium oxide as the upper layer was formed on the titanium material.

After this treatment, the surface-treated material was coated with a titanium oxide material (PST-18NR, produced by JGC Catalysts and Chemicals Ltd.) by a squeegee method so that the coated area was 0.12 cm² (0.3 mm × 40 mm), 0.20 cm² (0.5 mm × 40 mm), or 0.4 cm² (1 mm × 40 mm), followed by firing at 450°C for 15 minutes. The material was coated 5 times so that the film thickness was 15 µm (semiconductor layer), followed by firing at 450°C for 1 hour. Further, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

Subsequently, 0.45 mM ruthenium-based dye N719 (dye sensitizing agent, produced by Solaronix) and 0.15 mM ruthenium-based dye N749 (dye sensitizing agent, produced by Solaronix) were diluted in a mixture of tert-butanol (t-BtOH) (produced by Wako Pure Chemical Industries, Ltd.) and acetonitrile (CH₃CN) (produced by Wako Pure Chemical Industries, Ltd.) to prepare a dye solution. The mixing ratio of t-BtOH:CH₃CN in the mixture was 1:1. The metal titanium plate after firing was immersed in the dye solution at 40°C for 14 hours, thereby obtaining a photoelectrode material.

The surface-treated metal titanium was ground with a precision grinder (AC-D12, produced by Sunhayato Corp.) to thereby provide a collecting part.

### (3) Production of Counter Electrode Plate

The counter electrode was obtained by washing an FTO-deposited glass plate (produced by Asahi Glass Co., Ltd.) with solvents (acetone and ethanol), drying the plate, and forming an antireflection coating (produced by Taisho Kogaku, K.K.), followed by electron-beam deposition of 1-nm platinum.

A terminal part was provided by coating Special Solder Cerasolzer #186 (produced by Kuroda Techno Co., Ltd.).

### (4) Production of Dye-Sensitized Solar Cell

0.01 M I₂ (iodine), 0.02 M LiI (lithium iodide), 0.72 M DMPII, and 1.0 M TBP were dissolved in acetonitrile (produced by Wako Pure Chemical Industries, Ltd.) to prepare an electrolyte solution. The prepared electrolyte solution was placed in the gap between the photoelectrodes and the counter electrodes (electrolyte layer).

Subsequently, the gap between the electrodes was sealed with a UV-cured acrylic resin (TB3035B, sealing material, produced by ThreeBond). The sealing material was cured by using a conveyor-type UV irradiation apparatus (VB-15201BY-A, produced by Ushio Inc.) with an integrated intensity of 40 kJ/m², thus producing dye-sensitized solar cells.

### (5) Evaluation Results

Table 2 shows the results of the evaluation of the photoelectric conversion efficiency of the dye-sensitized solar cells having different titanium oxide material coated areas (cell sizes).

The results shown in Table 2 reveal that the narrower the cell width of the dye-sensitized solar cell, the higher the conversion efficiency was.

**Table 2**

| Cell size | Short-circuit current density (mA/cm²) | Open-circuit voltage (V) | Fill factor | Conversion efficiency (%) |
|---|---|---|---|---|
| 0.3 mm (width) × 40 mm | 36.32 | 0.688 | 0.669 | 16.72 |
| | 43.39 | 0.692 | 0.644 | 19.33 |
| | 42.60 | 0.694 | 0.647 | 19.12 |
| 0.5 mm (width) × 40 mm | 25.59 | 0.707 | 0.721 | 13.04 |
| | 28.70 | 0.725 | 0.710 | 14.78 |
| | 25.79 | 0.712 | 0.718 | 13.19 |
| 1 mm (width) × 40 mm | 16.94 | 0.725 | 0.729 | 8.96 |
| | 17.80 | 0.727 | 0.718 | 9.29 |
| | 19.45 | 0.721 | 0.723 | 10.15 |

### Example 3

### (1) Production of Anodized Titanium Material

A metal titanium plate (titanium material, photoelectrode substrate) was degreased with trichloroethylene. Using a nitriding furnace (NVF-600-PC, produced by Nakanihon-Ro Kogyo Co., Ltd.), titanium nitride was formed on the surface of the degreased metal titanium plate.

First, the metal titanium plate was held by a plate carbon material placed in the nitriding furnace. Subsequently, in order to remove oxygen, the pressure in the nitriding furnace was reduced to 1 Pa or less, and then high-purity (99.99% or more) nitrogen gas was introduced into the nitriding furnace to return the pressure to 0.1 MPa (atmospheric pressure). Then, the temperature of the nitriding furnace was raised to 950°C for 2 hours. Thereafter, heat treatment was performed in the nitriding furnace at 950°C for 1 hour, thereby forming titanium nitride on the surface of the metal titanium plate.

The metal titanium plate with titanium nitride formed on the surface thereof was anodized with 1.5 M sulfuric acid (produced by Wako Pure Chemical Industries, Ltd.), 0.05 M phosphoric acid (produced by Wako Pure Chemical Industries, Ltd.), and 0.3 M hydrogen peroxide (produced by Wako Pure Chemical Industries, Ltd.) at a current density of 4 A/dm² for 30 minutes. Thus, an anatase-type titanium oxide film was formed.

Further, in order to remove the low-order titanium oxide contained in the anodic oxide film, anodization was performed with an aqueous solution of 0.3 M ammonium hydrogen fluoride (produced by Wako Pure Chemical Industries, Ltd.) and hydrogen peroxide (produced by Wako Pure Chemical Industries, Ltd.) at 0.1 A/dm² for 15 minutes.

### (2) Production of Photoelectrode

A dye-sensitized solar cell was produced using the above surface-treated metal titanium plate (9 mm × 50 mm) as a photoelectrode. First, the surface-treated metal titanium plate was washed with ethanol, which is a solvent, and dried. Next, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min) .

Subsequently, the resulting material was immersed in a 150 mM aluminum chloride (AlCl₃, produced by Wako Pure Chemical Industries, Ltd.) aqueous solution at room temperature for 2 minutes, and then dried, followed by firing at 450°C for 15 minutes. This treatment was repeated twice. Next, the material was immersed in a 10 mM niobium chloride (NbCl₅, produced by Wako Pure Chemical Industries, Ltd.) aqueous solution at 70°C for 30 minutes, and then dried, followed by firing at 450°C for 15 minutes. This treatment was repeated twice. Thereafter, the material was immersed in a 120 mM titanium tetrachloride (TiCl₄, produced by Wako Pure Chemical Industries, Ltd.) aqueous solution at 70°C for 30 minutes, and then dried, followed by firing at 450°C for 15 minutes. This treatment was repeated twice. In this manner, a blocking layer comprising a layer of aluminum oxide as the lower layer, a layer of niobium oxide as the intermediate layer, and a layer of titanium oxide as the upper layer was formed on the titanium material.

After this treatment, the surface-treated material was coated with a titanium oxide material (PST-18NR, produced by JGC Catalysts and Chemicals Ltd.) by a squeegee method so that the coated area was 0.20 cm² (0.5 mm × 40 mm), followed by firing at 450°C for 15 minutes. The material was coated 5 times so that the film thickness was 15 µm (semiconductor layer), followed by firing at 450°C for 1 hour. Further, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

Subsequently, 0.45 mM ruthenium-based dye N719 (dye sensitizing agent, produced by Solaronix) and 0.15 mM ruthenium-based dye N749 (dye sensitizing agent, produced by Solaronix) were diluted in a mixture of tert-butanol (t-BtOH) (produced by Wako Pure Chemical Industries, Ltd.) and acetonitrile (CH₃CN) (produced by Wako Pure Chemical Industries, Ltd.) to prepare a dye solution. The mixing ratio of t-BtOH:CH₃CN in the mixture was 1:1. The metal titanium plate after firing was immersed in the dye solution at 40°C for 14 hours, thereby obtaining a photoelectrode material.

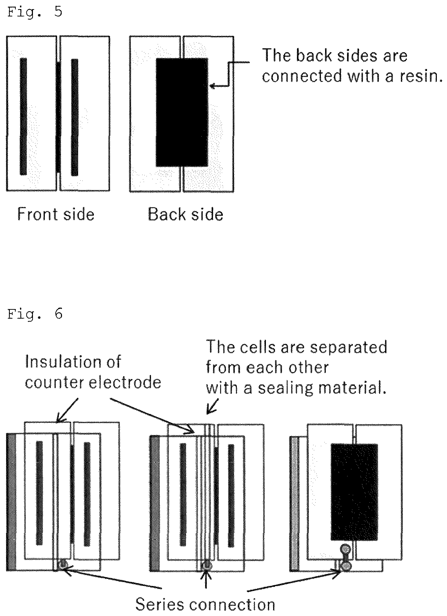

Two of the obtained photoelectrode materials were connected together at the back side of the substrates using Himilan (produced by Du Pont-Mitsui Polychemicals Co., Ltd.) in such a manner that the photoelectrodes were not brought into contact with each other, as shown in Figs. 5 and 6.

Fig. 5 shows that two of the obtained photoelectrode materials were connected at the back side of the substrates using a resin in such a manner that the photoelectrodes were not brought into contact with each other.

The surface-treated metal titanium was ground with a precision grinder (AC-D12, produced by Sunhayato Corp.) to thereby provide a collecting part.

### (3) Production of Counter Electrode Plate

The counter electrode was obtained by washing an FTO-deposited glass plate (produced by Asahi Glass Co., Ltd.) with solvents (acetone and ethanol), drying the plate, and forming an antireflection coating (produced by Taisho Kogaku, K.K.), followed by electron-beam deposition of 1-nm platinum.

The above counter electrode plate was cut to a size of 20 mm × 50 mm, and the FTO film and platinum were removed by using zinc powder (produced by Wako Pure Chemical Industries, Ltd.) and hydrochloric acid (produced by Wako Pure Chemical Industries, Ltd.) to achieve insulation. A terminal part was provided by coating Special Solder Cerasolzer #186 (produced by Kuroda Techno Co., Ltd.).

### (4) Production of Dye-Sensitized Solar Cell Module

A UV-cured acrylic resin (TB3035B, sealing material, produced by ThreeBond) was applied around the center of the photoelectrodes, the counter electrode plates were set, and the sealing material was cured by using a conveyor-type UV irradiation apparatus (VB-15201BY-A, produced by Ushio Inc.) with an integrated intensity of 40 kJ/m² to separate the cells from each other, so as not to allow the cells to share the same electrolyte solution.

Separately, cells that were not subjected to this treatment were also produced, and a comparative test was performed.

According to one embodiment of the dye-sensitized solar cell module of the present invention, a sealing material is applied around the center of the photoelectrodes, the counter electrode plates are set, and the sealing material is cured to separate the cells from each other, so as not to allow the cells to share the same electrolyte solution. In this embodiment, the cells are separated, and the electrolyte solution is prepared individually for each cell.

According to one embodiment of the dye-sensitized solar cell module of the present invention in which this treatment is not performed for the cells, the cells are not separated, and the electrolyte solution is not individually required for each cell. This demonstrates one embodiment of the dye-sensitized solar cell module of the present invention in which two or more photoelectrodes and counter electrodes share the same electrolyte layer.

0.006 M I₂ (iodine), 0.02 M LiI (lithium iodide), 0.72 M DMPII, and 1.0 M TBP were dissolved in acetonitrile (produced by Wako Pure Chemical Industries, Ltd.) to prepare an electrolyte solution. The prepared electrolyte solution was placed in the gap between the photoelectrodes and the counter electrodes (electrolyte layer).

Subsequently, the gap between the electrodes was sealed with a UV-cured acrylic resin (TB3035B). The sealing material was cured by using a conveyor-type UV irradiation apparatus with an integrated intensity of 40 kJ/m². Thereafter, each cell was connected in series with a copper wire to produce a simple dye-sensitized solar cell module.

### (5) Evaluation Results

Table 3 shows the results of the comparison of the photoelectric conversion efficiency in terms of the presence or absence of the separation of each cell in the dye-sensitized solar cell module.

As shown in Table 3, the conversion efficiency was the same regardless of the presence or absence of the separation of the cells, indicating that preparing an electrolyte solution individually for each cell is not necessary in the production of the module.

According to one embodiment of the present invention, separation of the cells or preparation of an electrolyte solution individually for each cell is not considered in the production of the module. In the production of the module of the present invention, (a) the cells may be separated, and an electrolyte solution may be prepared individually for each cell; or (b) the cells are not separated, and an electrolyte solution is not individually required for each cell.

**Table 3**

| Separation of cells | Short-circuit current density (mA/cm²) | Open-circuit voltage (V) | Fill factor | Conversion efficiency (%) |
|---|---|---|---|---|
| No | 7.21 | 1.577 | 0.767 | 10.14 |
| | 8.49 | 1.590 | 0.643 | 10.42 |
| | 6.73 | 1.564 | 0.770 | 9.80 |
| Yes | 10.00 | 1.527 | 0.569 | 9.92 |
| | 9.63 | 1.527 | 0.602 | 9.48 |
| | 10.09 | 1.526 | 0.595 | 10.22 |

### Example 4

### (1) Production of Anodized Titanium Material

The lateral side of a metal titanium plate (titanium material, photoelectrode substrate) was subjected to smoothing treatment by milling machine processing (VHR-SD, produced by Shizuoka Machine Tool Co., Ltd.), and degreased with trichloroethylene. Using a nitriding furnace (NVF-600-PC, produced by Nakanihon-Ro Kogyo Co., Ltd.), titanium nitride was formed on the degreased metal titanium plate surface.

First, the metal titanium plate was held by a plate carbon material placed in the nitriding furnace. Subsequently, in order to remove oxygen, the pressure in the nitriding furnace was reduced to 1 Pa or less, and then high-purity (99.99% or more) nitrogen gas was introduced into the nitriding furnace to return the pressure to 0.1 MPa (atmospheric pressure). Then, the temperature of the nitriding furnace was raised to 950°C for 2 hours. Thereafter, heat treatment was performed in the nitriding furnace at 950°C for 1 hour, thereby forming titanium nitride on the surface of the metal titanium plate.

The metal titanium plate with titanium nitride formed on the surface thereof was anodized with 1.5 M sulfuric acid (produced by Wako Pure Chemical Industries, Ltd.), 0.05 M phosphoric acid (produced by Wako Pure Chemical Industries, Ltd.), and 0.3 M hydrogen peroxide (produced by Wako Pure Chemical Industries, Ltd.) at a current density of 4 A/dm² for 30 minutes. Thus, an anatase-type titanium oxide film was formed.

### (2) Production of Photoelectrode

A dye-sensitized solar cell was produced using the above surface-treated metal titanium plate (25 mm × 50 mm × 2 mm) as a photoelectrode. First, the surface-treated metal titanium plate was washed with ethanol, which is a solvent, and dried. Next, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

Subsequently, the resulting material was immersed in a 150 mM aluminum chloride (AlCl₃, produced by Wako Pure Chemical Industries, Ltd.) aqueous solution at room temperature for 2 minutes, and then dried, followed by firing at 450°C for 15 minutes. This treatment was repeated twice. Next, the material was immersed in a 10 mM niobium chloride (NbCl₅, produced by Wako Pure Chemical Industries, Ltd.) aqueous solution at 70°C for 30 minutes, and then dried, followed by firing at 450°C for 15 minutes. This treatment was repeated twice. Thereafter, the material was immersed in a 120 mM titanium tetrachloride (TiCl₄, produced by Wako Pure Chemical Industries, Ltd.) aqueous solution at 70°C for 30 minutes, and then dried, followed by firing at 450°C for 15 minutes. This treatment was repeated twice. In this manner, a blocking layer comprising a layer of aluminum oxide as the lower layer, a layer of niobium oxide as the intermediate layer, and a layer of titanium oxide as the upper layer was formed on the titanium material.

After this treatment, the milled (smoothed) side (width: 2 mm × length: 50 mm) of the surface-treated material was coated with a titanium oxide material (PST-18NR, produced by JGC Catalysts and Chemicals Ltd.) by a squeegee method so that the coated area was 0.8 cm² (2 mm × 40 mm), followed by firing at 450°C for 15 minutes. The material was coated 5 times so that the film thickness was 15 µm (semiconductor layer), followed by firing at 450°C for 1 hour. Further, an oxygen flow was applied (0.05 MPa, 5 min) in a UV ozone cleaner (UV253S, produced by Filgen, Inc.). After ultraviolet irradiation for 30 minutes, a nitrogen flow was further applied (0.2 MPa, 7.5 min).

Subsequently, the obtained photoelectrodes and slide glasses as an insulation material were disposed in an alternating fashion, both ends of the resulting product were held between titanium materials, and each material was bonded by thermal compression using Himilan (produced by Du Pont-Mitsui Polychemicals Co., Ltd.). At this time, two of the photoelectrodes were used.

For the obtained photoelectrodes, 0.45 mM ruthenium-based dye N719 (dye sensitizing agent, produced by Solaronix) and 0.15 mM ruthenium-based dye N749 (dye sensitizing agent, produced by Solaronix) were diluted in a mixture of tert-butanol (t-BtOH) (produced by Wako Pure Chemical Industries, Ltd.) and acetonitrile (CH₃CN) (produced by Wako Pure Chemical Industries, Ltd.) to prepare a dye solution. The mixing ratio of t-BtOH:CH₃CN in the mixture was 1:1.

The metal titanium plate after firing was immersed in the dye solution at 40°C for 14 hours, thereby obtaining a photoelectrode material.

### (3) Production of Counter Electrode Plate

The counter electrode was obtained by washing an FTO (fluorine tin oxide)-deposited glass plate (produced by Asahi Glass Co., Ltd.) with solvents (acetone and ethanol), drying the plate, and forming an antireflection coating (produced by Taisho Kogaku, K.K.), followed by electron-beam deposition of 1-nm platinum.

The above counter electrode plate was cut to a size (20 mm × 50 mm), and a polyimide tape was adhered to portions that faced photoelectrodes, followed by sufficient rubbing for masking. Subsequently, the FTO film and platinum at the non-masking portions were removed with zinc powder (produced by Wako Pure Chemical Industries, Ltd.) and hydrochloric acid (produced by Wako Pure Chemical Industries, Ltd.) to achieve insulation.

Subsequently, holes were made in the glass plate with a precision grinder (AC-D12, produced by Sunhayato Corp.) to provide electrolyte solution injection inlets. A terminal part was provided by coating Special Solder Cerasolzer #186 (produced by Kuroda Techno Co., Ltd.).

### (4) Production of Dye-Sensitized Solar Cell Module

A UV-cured acrylic resin (TB3035B, sealing material, produced by ThreeBond) was applied to the titanium portion of the outer frame of the module, the counter electrode plate was set, and the sealing material was cured by using a conveyor-type UV irradiation apparatus (VB-15201BY-A, produced by Ushio Inc.) with an integrated intensity of 40 kJ/m². Thus, the photoelectrodes and the counter electrodes were bonded.

0.006 M I₂ (iodine), 0.02 M LiI (lithium iodide), 0.72 M DMPII, and 1.0 M TBP were dissolved in acetonitrile (produced by Wako Pure Chemical Industries, Ltd.) to prepare an electrolyte solution. The prepared electrolyte solution was introduced into the cells from the electrolyte solution injection inlets (electrolyte layer).

Subsequently, the electrolyte solution injection inlets were closed using a UV-cured acrylic resin (TB3035B), and a cover glass was bonded thereon for sealing.

Thereafter, each cell was connected in series with a copper wire to produce a two-series dye-sensitized solar cell module.

### (5) Evaluation Results

Table 4 shows the results of the comparison of the photoelectric conversion efficiency of the obtained two-series dye-sensitized solar cell module.

**Table 4**

| Short-circuit current density (mA/cm²) | Open-circuit voltage (V) | Fill factor | Conversion efficiency (%) |
|---|---|---|---|
| 1.95 | 1.571 | 0.506 | 1.55 |

The following is one embodiment of the present invention. A dye-sensitized solar cell module in which photoelectrodes and counter electrodes are disposed opposite to each other in a T-shape via an electrolyte layer, wherein
(1) two or more of the photoelectrodes, each comprising a titanium material and a porous titanium oxide layer containing a dye sensitizing agent formed on a cross-sectional surface of the titanium material, are arrayed,
   the photoelectrodes each having a structure such that (i) the porous titanium oxide layer is formed in an elongated shape on a cut surface of a photoelectrode substrate formed of a 0.1- to 5-mm-thick titanium material substrate obtained by cutting from a 0.1- to 5-mm-thick titanium material substrate, and (ii) the titanium material substrates are integrated with an insulation material,
(2) the insulation material is disposed between the photoelectrodes,
(3) the counter electrodes each comprise a transparent conductive glass or transparent conductive film coated with an electrochemical catalyst layer,
   the counter electrodes each comprising the transparent conductive glass or transparent conductive film coated with the electrochemical catalyst layer being disposed, in a T-shape, above the cut surface of each of the two or more photoelectrodes integrated with the insulation material,
(4) the transparent conductive glass or transparent conductive film is insulated on the insulation material side by removing the transparent conductive layer, together with the electrochemical catalyst layer, by etching,
(5) the photoelectrodes and the counter electrodes are electrically connected, and
(6) the photoelectrodes and the counter electrodes comprise a connecting part from which electricity is carried to the outside.

The following is also one embodiment of the present invention. The dye-sensitized solar cell module, wherein the arrayed two or more photoelectrodes and the counter electrodes share the same electrolyte layer.

The present invention encompasses a dye-sensitized solar cell module in which separation of the cells or preparation of an electrolyte solution individually for each cell is not considered in the production of the module. In the production of the module of the present invention, (a) the cells may be separated, and an electrolyte solution may be prepared individually for each cell; or (b) the cells are not separated, and an electrolyte solution is not individually required for each cell.

In the dye-sensitized solar cell module of the present invention, the former embodiment (a), in which the cells are separated, and an electrolyte solution is prepared individually for each cell, is achieved by applying a sealing material around the center of the photoelectrodes, setting the counter electrode plates, and curing the sealing material to separate the cells from each other, so as not to allow the cells to share the same electrolyte solution.

In the dye-sensitized solar cell module of the present invention, the latter embodiment (b), in which the cells are not separated, and an electrolyte solution is not individually required for each cell, is achieved when this treatment is not performed for the cells, thus achieving an embodiment in which the arrayed two or more photoelectrodes and the counter electrodes share the same electrolyte layer.

Example 3 above shows a structure in which only an adhesion material was disposed between the photoelectrodes, the structure of which is encompassed by the present invention. The conversion efficiency was compared between the dye-sensitized solar cell modules of the present invention with or without the separation of the cells. The results confirmed that the conversion efficiency was the same regardless of the separation of the cells.

Example 4 above demonstrated a structure in which an insulation material was disposed between the photoelectrodes, and bonding by thermal compression was performed with an adhesion material, the structure of which is encompassed by the present invention.

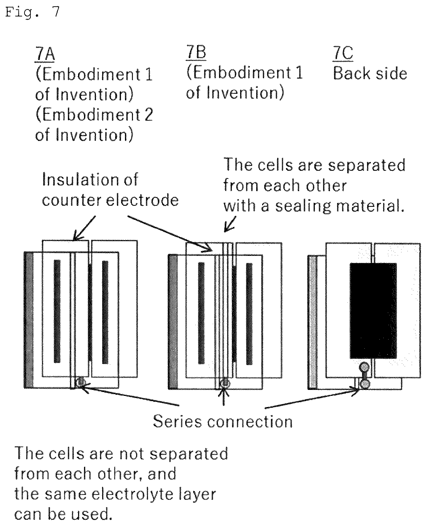

Fig. 6 is described in more detail with reference to Fig. 7.

Fig. 7A shows an embodiment demonstrating the latter, i.e., (b) the cells are not separated, and an electrolyte solution is not individually required for each cell. Fig. 7A shows one embodiment of the dye-sensitized solar cell module of the present invention in which the arrayed two or more photoelectrodes and the counter electrodes share the same electrolyte layer.

Fig. 7B demonstrates that a sealing material was applied around the center of the photoelectrode, the counter electrode plates were set, and the sealing material was cured to separate the cells from each other, so as not to allow the cells to share the same electrolyte solution. Fig. 7B shows an embodiment of the dye-sensitized solar cell module of the present invention demonstrating the former, i.e., (a) the cells may be separated, and an electrolyte solution may be prepared individually for each cell.

Fig. 7C shows the back side of the dye-sensitized solar cell module (Fig. 5).

### Description of Reference Numerals

- 1.: Surface-Treated Titanium Material
- 2.: Porous Titanium Oxide/Dye Sensitizing Agent
- 3.: Insulation Material
- 4.: Glass Substrate
- 5.: Transparent Conductive Layer
- 6.: Electrochemical Reduction Catalyst Layer
- 7.: Electrolyte
- 8.: Electrolyte Injection Inlet
- 9.: Sealing Material
- 10.: Connection Wiring
- 11.: External Connection Wiring
- 12.: Outer Frame
- 13.: Spacer
- 14.: Antireflection Film

## Claims

1. A dye-sensitized solar cell module in which photoelectrodes and counter electrodes are disposed opposite to each other in a T-shape via an electrolyte layer,
wherein
(1) two or more of the photoelectrodes, each comprising a titanium material and a porous titanium oxide layer containing a dye sensitizing agent formed on a cross-sectional surface of the titanium material, are arrayed,
the photoelectrodes each having a structure such that (i) the porous titanium oxide layer is formed in an elongated shape on a cut surface of a photoelectrode substrate formed of a 0.1- to 5-mm-thick titanium material substrate obtained by cutting from a 0.1- to 5-mm-thick titanium material substrate, and (ii) the titanium material substrates are integrated with an insulation material,
(2) the insulation material is disposed between the photoelectrodes,
(3) the counter electrodes each comprise a transparent conductive glass or transparent conductive film coated with an electrochemical catalyst layer,
the counter electrodes each comprising the transparent conductive glass or transparent conductive film coated with the electrochemical catalyst layer being disposed, in a T-shape,
above the cut surface of each of the two or more photoelectrodes integrated with the insulation material,
(4) the transparent conductive glass or transparent conductive film is insulated on the insulation material side by removing the transparent conductive layer, together with the electrochemical catalyst layer, by etching,
(5) the photoelectrodes and the counter electrodes are electrically connected, and
(6) the photoelectrodes and the counter electrodes comprise a connecting part from which electricity is carried to the outside.

2. The dye-sensitized solar cell module according to claim 1, wherein the arrayed two or more photoelectrodes and the counter electrodes share the same electrolyte layer.

3. The dye-sensitized solar cell module according to claim 1 or 2, wherein the photoelectrodes and the counter electrodes are electrically connected by wiring from at least one side of each of the photoelectrodes from among five sides other than the side opposite to the counter electrode in a T-shape via the electrolyte layer.

4. The dye-sensitized solar cell module according to any one of claims 1 to 3, wherein the titanium material constituting the photoelectrodes is obtained by cutting from a titanium material with a thickness of 0.1 to 5 mm, and subjecting the cut surface to smoothing treatment.

5. The dye-sensitized solar cell module according to any one of claims 1 to 4, wherein the titanium material is at least one material selected from the group consisting of metal titanium, titanium alloys, surface-treated metal titanium, and surface-treated titanium alloys.

6. The dye-sensitized solar cell module according to claim 5, wherein a surface-treated layer is removed from at least one side of the surface-treated metal titanium or surface-treated titanium alloy from among five sides other than the side opposite to the counter electrode in a T-shape via the electrolyte layer, and the side from which the surface-treated layer is removed is wired.

7. The dye-sensitized solar cell module according to any one of claims 1 to 6, wherein each of the photoelectrodes has a blocking layer on the titanium material on the counter electrode side, and further has a porous titanium oxide layer containing a dye sensitizing agent on the blocking layer, and wherein the blocking layer comprises at least two layers selected from the group consisting of a layer of titanium oxide, a layer of aluminum oxide, a layer of silicon oxide, a layer of zirconium oxide, a layer of strontium titanate, a layer of magnesium oxide, and a layer of niobium oxide, and always comprises a layer of aluminum oxide.

8. The dye-sensitized solar cell module according to claim 7, wherein the blocking layer comprises at least two layers selected from the group consisting of a layer of titanium oxide, a layer of aluminum oxide, and a layer of niobium oxide.

9. The dye-sensitized solar cell module according to any one of claims 1 to 8, wherein the porous titanium oxide layer has a rectangular shape.

10. The dye-sensitized solar cell module according to any one of claims 1 to 9, wherein the electrochemical reduction catalyst layer is a platinum catalyst layer.

11. The dye-sensitized solar cell module according to any one of claims 1 to 10, wherein the counter electrodes comprise injection inlets for an electrolyte solution constituting the electrolyte layer.

12. The dye-sensitized solar cell module according to any one of claims 1 to 11, comprising an outer frame formed of a material that has durability against components of the electrolyte solution constituting the electrolyte layer on the outer circumference of the photoelectrodes integrated with the insulation material.

13. The dye-sensitized solar cell module according to claim 12, wherein the material of the outer frame that has durability against the components of the electrolyte solution constituting the electrolyte layer is at least one member selected from the group consisting of titanium, titanium alloys, fluororesins, and glass.

14. The dye-sensitized solar cell module according to claim 12 or 13, wherein the outer frame is smoothed at least on the counter electrode side.

15. The dye-sensitized solar cell module according to any one of claims 1 to 14, comprising a base, as the outer frame, formed of a material that has durability against the components of the electrolyte solution constituting the electrolyte layer, on the side opposite to the counter electrode side, via the insulation material.

16. The dye-sensitized solar cell module according to any one of claims 1 to 15, wherein the transparent conductive glass or transparent conductive film of the counter electrodes is subjected to antireflection-film formation.

17. The dye-sensitized solar cell module according to any one of claims 1 to 15, wherein the counter electrodes further comprise an antireflection film on a light irradiation surface of the transparent conductive glass or transparent conductive film.

18. The dye-sensitized solar cell module according to claim 14, wherein the interface of the outer frame and the counter electrodes is sealed with a material that has durability against the components of the electrolyte solution constituting the electrolyte layer.

19. The dye-sensitized solar cell module according to claim 18, wherein the material for sealing the interface of the outer frame and the counter electrodes is at least one material selected from the group consisting of UV-cured acrylic resin, ionomer resin films, epoxy resin, acrylic resin, hot melt resin, silicone elastomers, and butyl rubber elastomers.

20. The dye-sensitized solar cell module according to any one of claims 1 to 19, further comprising a light-concentrating device on the counter electrode side.

21. The dye-sensitized solar cell module according to claim 20, further comprising a cooling system.

22. A method for producing the dye-sensitized solar cell module of any one of claims 1 to 21, the method comprising:
disposing photoelectrodes and counter electrodes opposite to each other in a T-shape via a spacer; and
sealing an electrolyte layer between the photoelectrodes and the counter electrodes,
wherein the titanium material of the photoelectrodes is produced by the following surface treatment method comprising:
(1) forming titanium nitride on the surface of a metal titanium material or titanium alloy material;
(2) anodizing the metal titanium material or titanium alloy material with the titanium nitride formed on the surface thereof obtained in step (1) using an electrolyte solution that has an etching effect on titanium at a voltage equal to or higher than spark discharge generating voltage, thereby forming an anatase-type titanium oxide film.

23. A method for producing the dye-sensitized solar cell module of any one of claims 1 to 21, the method comprising:
disposing photoelectrodes and counter electrodes opposite to each other in a T-shape via a spacer; and
sealing an electrolyte layer between the photoelectrodes and the counter electrodes,
wherein
the titanium material of the photoelectrodes is produced by the following surface treatment method comprising:
(1) forming titanium nitride on the surface of a metal titanium material or titanium alloy material;
(2) anodizing the metal titanium material or titanium alloy material with the titanium nitride formed on the surface thereof obtained in step (1) in an electrolyte solution that does not have an etching effect on titanium; and
(3) heating the anodized metal titanium material or titanium alloy material obtained in step (2) in an oxidizing atmosphere, thereby forming an anatase-type titanium oxide film.

24. The method for producing the dye-sensitized solar cell module according to claim 22 or 23, wherein the step of forming titanium nitride is performed by one treatment method selected from the group consisting of PVD treatment, CVD treatment, spraying treatment, heat treatment under an ammonia gas atmosphere, and heat treatment under a nitrogen gas atmosphere.

25. The method for producing the dye-sensitized solar cell module according to claim 24, wherein the heat treatment under a nitrogen gas atmosphere is performed in the presence of an oxygen-trapping agent.
